(19) Europäisches Patentamt
European Patent Office
Office européen des brevets

(11) **EP 1 277 074 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(21) Anmeldenummer: **01940191.8**

(22) Anmeldetag: **25.04.2001**

(51) Int Cl.:
**G02C 7/02** (2006.01)

(86) Internationale Anmeldenummer:
**PCT/DE2001/001581**

(87) Internationale Veröffentlichungsnummer:
**WO 2001/081980 (01.11.2001 Gazette 2001/44)**

(54) **PROGRESSIVES BRILLENGLAS MIT GERINGER DYNAMISCHER VERZEICHNUNG**

PROGRESSIVE SPECTACLE LENS WITH NEGLIGIBLE DYNAMIC DISTORTION

VERRE DE LUNETTE PROGRESSIF A FAIBLE DISTORSION D'IMAGE DYNAMIQUE

(84) Benannte Vertragsstaaten:
**AT BE CH CY DE DK ES FI FR GB GR IE IT LI LU MC NL PT SE TR**

(30) Priorität: **25.04.2000 DE 10020238**
**25.04.2000 DE 10020244**
**28.04.2000 DE 10021047**
**17.01.2001 DE 100188 q**

(43) Veröffentlichungstag der Anmeldung:
**22.01.2003 Patentblatt 2003/04**

(73) Patentinhaber: **Rodenstock GmbH**
**80469 München (DE)**

(72) Erfinder:
• **WELK, Andrea**
**81547 München (DE)**
• **BAUMBACH, Peter**
**81543 München (DE)**
• **HAIMERL, Walter**
**80337 München (DE)**
• **PFEIFFER, Herbert**
**81247 München (DE)**
• **ESSER, Gregor**
**81735 München (DE)**
• **ALTHEIMER, Helmut**
**87650 Lauchdorf (DE)**
• **DORSCH, Rainer**
**81477 München (DE)**

(74) Vertreter: **Müller-Boré & Partner**
**Patentanwälte**
**Grafinger Strasse 2**
**81671 München (DE)**

(56) Entgegenhaltungen:
**US-A- 4 606 622     US-A- 5 488 442**
**US-A- 5 854 669**

**Beschreibung**

**Technisches Gebiet**

Die Erfindung bezieht sich auf ein Verfahren zum Herstellen eines progressiven Brillenglasömit geringer dynamischer Verzeichnung gemäß dem Patentanspruch 1.

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze-können der Fern- und der Nahteil auch anders angeordnet sein und/oder für andere Entfernungen ausgelegt sein. Ferner ist es möglich, daß mehrere Nahteile und/ oder mehrere Fernteile und entsprechende Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben.) Die Hauptkrümmungsradien bestimmen zusammen mit dem Brechungsindex n des Glasmaterials die für die augenoptische Charakterisierung einer Fläche häufig verwendeten Größen:

```
Flächenbrechwert D      = 0,5 * (n-1) * (1/R1 + 1/R2)


Flächenastigmatismus A =      (n-1) * (1/R1 - 1/R2)
```

Der Flächenbrechwert D ist die Größe, über die die Zunahme der Wirkung vom Fernteil zum Nahteil erreicht wird. Der Flächenastigmatismus A (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

**Stand der Technik**

Die zur Erzielung der Flächenbrechwert-Zuwachses erforderliche Änderung der Krümmung der Fläche ohne "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem großen Flächenastigmatismus führen, der das Glas in den Bereichen seitlich der genannten Linie mehr oder weniger schlecht macht.

Darüberhinaus ergeben sich durch die starke Variation der prismatischen Wirkungen dynamische Verzeichnungseffekte, deren Ursache im folgenden erläutert werden soll:

Hierzu wird die Abbildung einer Menge von n paarweise verschiedenen Objektpunkten P(x,y) betrachtet, die in einer Ebene im Abstand s vor dem Brillenglas liegen. Ohne Beschränkung der Allgemeinheit sollen diese in Form eines äquidistanten Gitters angeordnet sein. Bildet man diese Objektpunkte P(x,y) durch ein Brillenglas derart ab, daß die Hauptstrahlen durch einen augenseitig gelegenen Punkt Z (z.B. den Augendrehpunkt oder die Eintrittspupille des Auges) gehen, und schneidet man die augenseitigen Hauptstrahlen mit einer zweiten im Abstand r vom Brillenglas gelegenen Ebene, im folgenden Projektionsebene genannt, so ergibt sich eine zweite Menge von n Punkten B, die Bildpunkte der Objektpunkte P(x,y) in der Projektionsebene.

Allgemein formuliert leistet das Brillenglas die Abbildung A von der Objekt- in die Projektionsebene dergestalt

$$A : \quad G \mapsto B$$

Das Bildgitter ist in der Regel nicht mehr äquidistant, sondern es ist durch den "Verzeichnung" genannten, bekannten Abbildungsfehler verzerrt. Bei einem Strahlengang mit Hinterblende, wie er beim Brillenträger vorliegt, ist die Verzeichnung bei Einstärken-Plusgläsern kissenförmig und bei Einstärken-Minusgläsern tonnenförmig. Bei Gleitsichtgläsern können Mischformen auftreten.

Erfindungsgemäß ist erkannt worden, daß zusätzliche Effekte auftreten, wenn man die zeitliche Änderung der verzeichneten Gitter $\vec{v}_B$ in der Projektionsebene bei Translationen des Objektgitters $\vec{v}_G$ betrachtet. Die Bewegung der Gitter wird in üblicher Weise durch Vektorfelder für die Geschwindigkeit $\vec{v}(x,y)$ dargestellt. Der Gitterpunkt mit dem Index i hat die Geschwindigkeit $\vec{v}_i(x_i, y_i)$.

Es sei angemerkt, daß innerhalb eines gewissen einfach zusammenhängenden Gebietes jeder Punkt P(x,y) der Objektebene in die Projektionsebene abgebildet wird. Die Beschränkung auf abzählbar endlich viele, diskrete Gitterpunkte $P_i$ dient nur der graphischen Anschaulichkeit. n kann also endlich oder unendlich groß sein.

Bietet man dem menschlichen Auge ein durch ein Gleitsichtglas abgebildetes, in sich starres, aber bewegtes Objektgitter dar, so erscheint das verzerrte Gitter in der Projektionsebene während der Bewegung nicht nur als Ganzes starr bewegt. Vielmehr erkennt man zusätzlich zur erwarteten, von der Translation des Objektgitters herkommenden, gerichteten Bewegung auch eine ungerichtete Komponente

$$\vec{v}_B = \vec{v}_{BGerichtet} + \vec{v}_{BUngerichtet} \ .$$

Das Vektorfeld $\vec{v}_B$ ist im allgemeinen weder divergenznoch rotationsfrei:

Es gibt Gebiete, in denen die Dichte der Gitterpunkte im Verlauf der Bewegung ansteigt $\nabla \cdot \vec{v} > 0$ und andere, in denen sie sinkt $\nabla \cdot \vec{v} < 0$: das Gitter scheint in sich durchgeknetet zu werden.

Bei kreisenden Blickbewegungen gilt auch: $\nabla \times \vec{v} \neq 0$

Besonders auffällig sind die dynamischen Effekte, wenn man die gerichtete Komponente vom Gesamtgeschwindigkeitsfeld subtrahiert. Alle in der vorliegenden Anmeldung gemachten Aussagen bezüglich Bahnkurven oder Trajektorien beziehen sich auf sog. relative Bahnkurven im Koordinatensystem eines bestimmten Bezugspunktes, des stationären Punktes.

Zweckmäßigerweise wählt man diesen ausgezeichneten Punkt nahe der Mitte des Glases; im Rahmen dieser Anmeldung besitzt er ohne Beschränkung der Allgemeinheit die Koordinaten (0,0) in dem verwendeten kartesischen Koordinatensystem, das seinen Ursprung im objektseitigen Scheitel des Brillenglases hat. Die z-Achse weist in Lichtrichtung. Die Flächennormalenvektoren der erwähnten Ebenen haben nur eine z-Komponente.

Zur Beschreibung der durch die Bewegung von in Form eines äquidistanten Gitters angeordneten Objektpunkten sollen im folgenden die Trajektorien der ungerichteten Komponenten der Gitterpunkte bei einer horizontalen, periodischen Bewegung des Objektgitters betrachtet werden. Die Bahnkurve eines beliebig herausgegriffenen Objektpunktes ist dann eine horizontale Gerade, die des konjugierten Bildpunktes eine ebene Kurve. Diese Kurve ist charakterisiert durch den Verlauf der prismatischen Wirkung (oder der prismatischen Nebenwirkung) entlang der die Kurve erzeugenden Hauptstrahlen.

Die hier untersuchten horizontale Blickbewegungen kommen häufig vor, z.B. beim Lesen, beim Autofahren oder beim Arbeiten an einem Computer.

Für ein Einstärkenglas mit verschwindender Wirkung ist die ungerichtete Komponente Null. Die Trajektorien entarten zu Punkten. Der Zustand des Gitters ist stationär.

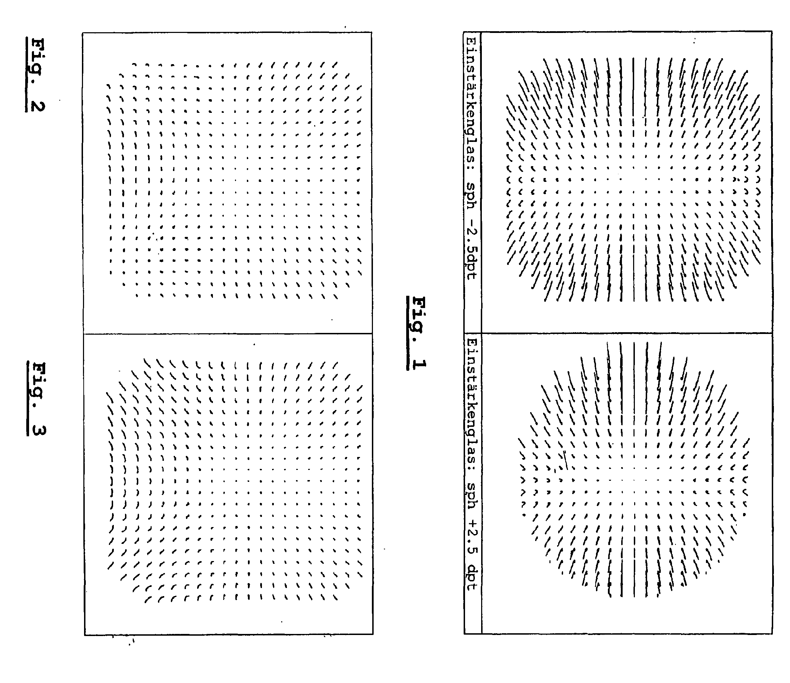

Im allgemeinen Fall mit nicht verschwindender Wirkung zeigen Einstärkengläser die in Fig. 1 dargestellten Charakteristiken. Im linken Teilbild sind die Trajektorien bei einer horizontalen Bewegung für ein Minusglas mit einer sphärische Wirkung von -2,5 dpt und im rechten Teilbild für ein Plusglas mit einer sphärische Wirkung von + 2,5 dpt dargestellt.

Man erkennt den stationären Punkt im Zentrum, auf den die ungerichtete Geschwindigkeitskomponente des abgebildeten Gitters bezogen wird.

Rechts und links dieses stationären Punktes sind rein horizontale Bahnen mit verschwindender vertikaler Komponente: bei der rein horizontalen Blickbewegung ändert sich entlang der Trajektorien in diesem Bereich nur die horizontale Komponente der prismatischen Nebenwirkungen; die vertikale Komponente - und damit die Steigung der Bahnkurven - ist Null.

Die Länge der gezeichneten Trajektorien nimmt - ebenso wie die prismatische Nebenwirkung - vom stationären Punkt radial nach außen hin monoton zu.

Geht man vom stationären Punkt nach oben oder unten, so erkennt man außerdem eine zunehmende Krümmung der Bahnkurven. Diese rührt daher, daß sich die vertikale Ablenkung der Hauptstrahlen während der Bewegung stärker ändert als weiter innen. Die Lage der Krümmungsmittelpunkte korreliert mit der Verzeichnung:

Eine Öffnung der Kurven nach innen (zum Glasmittelpunkt hin) bedeutet tonnenförmige Verzeichnung, während eine Öffnung nach außen eine kissenförmige Verzeichnung bedeutet.

Bei progressiven Brillengläsern werden die Merkmale der Trajektorien bei Einstärkengläsern durch die bei progressiven Brillengläsern auftretende Brechwertzunahme merklich verändert.

Die Fig. 2, 3, 4 und 5 zeigen die Trajektorien von auf dem Markt befindlichen Brillengläsern, die entsprechend dem folgenden Patentveröffentlichungen aufgebaut sein dürften:

Fig. 2    DE-C-28 14 936
Fig. 3    WO 95/27229
Fig. 4    DE-C-43 42 234,
Fig. 5    US-PS 4 606 622 bzw. DE 196 12177

Die Fig. 2 bis 5 zeigen auf dem Markt befindliche rechte Gläser mit der Verordnung sph +0.5dpt, zyl 0, Add 2.0 dpt, Pr 0 (alle Plots wurden mit r=0mm und s=40mm gerechnet).

Die Trajektorien des in Fig. 2 dargestellten relativ alten progressiven Brillenglases heben sich von allen anderen gezeigten Gläsern in der unteren Hälfte durch sehr kurze, extrem gekrümmte Trajektorien ab. Sie sind zum großen Teil sogar rückläufig, d.h. bei der hier beschriebenen horizontalen Blickbewegung scheinen sich viele Punkte zuerst mit und später entgegen der Bewegungsrichtung der Objekte zu bewegen. Dies erzeugt gravierende "Schaukelbewegungen" und die Objekte erscheinen stark dynamisch verzerrt.

Zur Berechnung eines progressiven Fläche in der Gebrauchsstellung wird eine Gebrauchssituation festgelegt. Diese bezieht sich entweder auf einen konkreten Nutzer, für den die einzelnen Parameter in der jeweiligen Gebrauchssituation eigens ermittelt und die progressive Fläche gesondert berechnet und gefertigt wird, oder auf Durchschnittswerte, wie sie in der DIN 58 208 Teil 2 beschrieben sind.

## Darstellung der Erfindung

Die Erfindung liegt die Aufgabe zugrunde, ein progressives Brillenglas derart weiterzubilden, daß die bei progressiven Brillengläsern zwangsläufig auftretende dynamische verzeichnung soweit minimiert ist, daß sie vom Brillenträger nicht mehr als störend empfunden wird.

Erfindungsgemäße Lösungen dieser Aufgabe sind in den Patentansprüchen angegeben.

Erfindungsgemäß erfüllen zur Minimierung der dynamischen Verzeichnung die Bahnkurven (Trajektorien relativ zum stationären Punkt bei (0,0)), die entstehen durch Verbinden der Schnittpunkte der bildseitigen Hauptstrahlen durch den Augendrehpunkt mit einer Projektionsebene im Abstand s vom objektseitigen Scheitel des Brillenglases bei Abbildung von horizontal bewegten Objektpunkten mit den Koordinaten (x-dx,y,s) zu Beginn der Bewegung und (x+dx,y,s) am Ende der Bewegung durch das progressive Brillenglas mit r= 0 mm, s= -40 mm und dx = 35 mm, folgende Eigenschaften:

Der Absolutbetrag der Differenz der minimalen und der maximalen y-Koordinate der Trajektorie ist kleiner als der in der nachfolgenden Tabelle angegebene Wert H:

| Sph = -4.0 dpt, Add = 1.0 dpt | | | | |
|---|---|---|---|---|
| **y = -5mm** | | | | |
| **x [mm]** | -30.0000 | -20.0000 | 20.0000 | 30.0000 |
| **H [mm]** | 0.1856 | 0.1233 | 0.0917 | 0.1602 |
| **y = -10mm** | | | | |
| **x [mm]** | -30.0000 | -20.0000 | 20.0000 | 30.0000 |
| **H [mm]** | 0.5294 | 0.3639 | 0.2681 | 0.4506 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| H [mm] | 0.0578 | 0.0320 | 0.0032 | 0.0354 |
| y = -10mm | | | | |
| x [mm] | -30.0000 | -20.0000 | 20.0000 | 30.0000 |
| H [mm] | 0.3601 | 0.2496 | 0.1334 | 0.2765 |

| Sph = -4.0 dpt, Add = 3.0 dpt | | | | |
|---|---|---|---|---|
| y = -5mm | | | | |
| x [mm] | -30.0000 | -20.0000 | 20.0000 | - 30.0000 |
| H [mm] | 0.0764 | 0.0648 | 0.0919 | 0.0754 |
| y = -10mm | | | | |
| x [mm] | -30.0000 | -20.0000 | 20.0000 | 30.0000 |
| H [mm] | 0.1425 | 0.1088 | 0.0297 | 0.0702 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.2399 | 0.1645 | 0.1494 | 0.2164 |
| y = -10mm | | | | |
| x [mm] | -30.0000 | -20.0000 | 20.0000 | 30.0000 |
| H [mm] | 0.4250 | 0.2887 | 0.2684 | 0.3859 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| H [mm] | 0.4535 | 0.3059 | 0.2945 | 0.4156 |
| y = -10mm | | | | |
| x [mm] | -30.0000 | -20.0000 | 20.0000 | 30.0000 |
| H [mm] | 0.7102 | 0.4717 | 0.4802 | 0.6734 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 0.7038 | 0.4646 | 0.4508 | 0.6353 |

(fortgesetzt)

| y = -10mm | | | | |
|---|---|---|---|---|
| x [mm] | -30.0000 | -20.0000 | 20.0000 | 30.0000 |
| H [mm] | 1.0653 | 0.6846 | 0.7621 | 1.0458 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.8607 | 0.5828 | 0.4944 | 0.7478 |
| y = -10mm | | | | |
| x [mm] | -30.0000 | -20.0000 | 20.0000 | 30.0000 |
| H [mm] | 11.6223 | 1.2440 | 1.0375 | 1.5808 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| H [mm] | 1.1921 | 0.7903 | 0.7106 | 1.0740 |
| y = -10mm | | | | |
| x [mm] | -30.0000 | -20.0000 | 20.0000 | 30.0000 |
| H [mm] | 11.3204 | 1.5119 | 1.3512 | 2.0477 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 1.6290 | 1.0524 | 0.9997 | 1.4771 |
| y = -10mm | | | | |
| x [mm] | -30.0000 | -20.0000 | 20.0000 | 30.0000 |
| H [mm] | 10.9637 | 1.8600 | 1.8110 | 2.6494 |

Alternativ oder zusätzlich kann die Bogenlänge der Trajektorie kürzer als der in der nachfolgenden Tabelle angegebene Wert L sein:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |

(fortgesetzt)

| y = -10mm | | | | |
|---|---|---|---|---|
| L [mm] | 1.8098 | 1.1431 | 1.1008 | 1.6803 |


| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |


| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.7463 | 1.1216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |


| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 0.6897 | 0.4330 | 0.3721 | 0.5844 |
| y = -10mm | | | | |
| x [mm] | -30.0000 | -20.0000 | 20.0000 | 30.0000 |
| L [mm] | 0.8672 | 0.6191 | 0.4724 | 0.6851 |


| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 0.9082 | 0.5691 | 0.4604 | 0.7418 |
| y = -10mm | | | | |
| x [mm] | -30.0000 | -20.0000 | 20.0000 | 30.0000 |
| L [mm] | 1.3123 | 0.9671 | 0.7530 | 0.9919 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.2493 | 0.8136 | 0.6038 | 0.9704 |
| y = -10mm | | | | |
| x [mm] | -30.0000 | -20.0000 | 20.0000 | 30.0000 |
| L [mm] | 1.9289 | 1.4589 | 1.1334 | 1.4221 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 3.7402 | 2.2660 | 2.0300 | 3.2926 |
| y = -10mm | | | | |
| x [mm] | -30.0000 | -20.0000 | 20.0000 | 30.0000 |
| L [mm] | 17.0238 | 2.8339 | 2.3619 | 3.7662 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 4.1363 | 2.4717 | 2.1643 | 3.6054 |
| y = -10mm | | | | |
| x [mm] | -30.0000 | -20.0000 | 20.0000 | 30.0000 |
| L [mm] | 17.7989 | 3.2727 | 2.6076 | 4.2396 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 4.6985 | 2.8115 | 2.3838 | 3.9886 |
| y = -10mm | | | | |
| x [mm] | -30.0000 | -20.0000 | 20.0000 | 30.0000 |
| L [mm] | 19.1536 | 3.9888 | 3.0181 | 4.7864 |

Bevorzugt oder alternativ kann die mittlere Steigung der Trajektorie kleiner als der in der nachfolgenden Tabelle angegebene Wert m sein:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| m | 0.1504 | 0.2091 | -0.2338 | -0.1701 |

(fortgesetzt)

| y = -10mm | | | | |
|---|---|---|---|---|
| x [mm] | -30.0000 | -20.0000 | 20.0000 | 30.0000 |
| m | 0.3796 | 0.5037 | -0.4935 | -0.4012 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.0486 | 0.0601 | 0.0086 | -0.0375 |
| y = -10mm | | | | |
| x [mm] | -30.0000 | -20.0000 | 20.0000 | 30.0000 |
| m | 0.2906 | 0.4609 | -0.3178 | -0.2642 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| m | -0.0698 | -0.1448 | 0.2513 | 0.0771 |
| y = -10mm | | | | |
| x [mm] | -30.0000 | -20.0000 | 20.0000 | 30.0000 |
| m | 0.1408 | 0.3482 | 0.0943 | -0.0701 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| m | 0.4286 | 0.5223 | -0.8628 | -0.6280 |
| y = -10mm | | | | |
| x [mm] | -30.0000 | -20.0000 | 20.0000 | 30.0000 |
| m | 0.5658 | 0.5608 | -0.7568 | -0.7614 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| m | 0.6271 | 0.7017 | -1.2670 | -1.0635 |
| y = -10mm | | | | |
| x [mm] | -30.0000 | -20.0000 | 20.0000 | 30.0000 |
| m | 0.6496 | 0.5786 | -0.8596 | -0.9913 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt | | | | |
|---|---|---|---|---|
| y = -5mm | | | | |
| x [mm] | -30.0000 | -20.0000 | 20.00000 | 30.0000 |
| M | 0.2821 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.3463 | 0.4457 | -0.6708 | -0.4628 |
| y = -10mm | | | | |
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671 |

Bevorzugt oder alternativ kann die maximale Steigung der Trajektorie kleiner als der in der nachfolgenden Tabelle angegebene Wert M sein:

| Sph = -4.0 dpt, Add = 1.0 dpt | | | | |
|---|---|---|---|---|
| y = - 10mm | | | | |
| x [mm] | -30.0000 | -20.0000 | 20.0000 | 30.0000 |

(fortgesetzt)

| Sph = -4.0 dpt, Add = 1.0 dpt | | | | |
|---|---|---|---|---|
| y = - 10mm | | | | |
| M | 6.7715 | 0.7457 | -0.4274 | -0.5090 |

| Sph = -4.0 dpt, Add = 2.0 dpt | | | | |
|---|---|---|---|---|
| y = -10mm | | | | |
| x [mm] | -30.0000 | -20.0000 | 20.0000 | 30.0000 |
| M | 0.2870 | 0.4403 | 0.1951 | -0.3184 |

| Sph = -4.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.2179 | -0.0023 | 1.4361 | 13.7067 |

| Sph = 0.5 dpt, Add = 1.0 dpt | | | | |
|---|---|---|---|---|
| y = -10mm | | | | |
| x [mm] | -30.0000 | -20.0000 | 20.0000 | 30.0000 |
| M | 0.8577 | 0.7249 | -1.1962 | -11.5313 |

| Sph = 0.5 dpt, Add = 2.0 dpt | | | | |
|---|---|---|---|---|
| y = -10mm | | | | |
| x [mm] | -30.0000 | -20.0000 | 20.0000 | 30.0000 |
| M | 0.9196 | 0.9184 | -1.3399 | -2.8994 |

| Sph = 0.5 dpt, Add = 3.0 dpt | | | | |
|---|---|---|---|---|
| y = -10mm | | | | |
| x [mm] | -30.0000 | -20.0000 | 20.0000 | 30.0000 |
| M | 1.0969 | 1.0391 | -1.9120 | -4.9332 |

| Sph = +5.0 dpt, Add = 1.0 dpt | | | | |
|---|---|---|---|---|
| y = -10mm | | | | |
| x [mm] | -30.0000 | -20.0000 | 20.0000 | 30.0000 |
| M | 1.9493 | 6.1058 | -1.9300 | -1.7983 |

| Sph = +5.0 dpt, Add = 2.0 dpt | | | | |
|---|---|---|---|---|
| y = -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -7.1729 | -7.8544 |

Weiterhin ist es von Vorteil, wenn bevorzugt oder alternativ die x-Koordinate des Zentrums der Trajektorie (halbe Summe der minimalen und der maximalen x-Koordinate) kleiner als der Wert xz gemäß der folgenen Tabelle ist

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xz [mm] | -11.2191 | -7.5330 | 7.5648 | 11.2896 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -11.3556 | -7.6222 | 7.6442 | 11.4147 |
| y = -10mm | | | | |
| x [mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -13.7030 | -9.1089 | 9.0833 | 13.6540 |
| y = -10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -13.7989 | -9.1581 | 9.1193 | 13.7287 |
| y = -10mm | | | | |
| x [mm] | -30.0000 | -20.0000 | 20.0000 | 30.0000 |
| xz [mm] | -13.9392 | -9.2439 | 9.1778 | 13.8389 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -14.0239 | -9.2904 | 9.2212 | 13.9123 |
| y = -10mm | | | | |
| x [mm] | -30.0000 | -20.0000 | 20.0000 | 30.0000 |
| xz [mm] | -14.2516 | -9.4367 | 9.3185 | 14.0854 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -17.3295 | -11.3902 | 11.2874 | 17.1168 |
| y = -10mm | | | | |
| x [mm] | -30.0000 | -20.0000 | 20.0000 | 30.0000 |
| xz [mm] | -12.9054 | -11.5804 | 11.4231 | 17.3537 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -17.7640 | -11.6405 | 11.5155 | 17.5159 |

(fortgesetzt)

| y = -10mm | | | | |
|---|---|---|---|---|
| **x [mm]** | -30.0000 | -20.0000 | 20.0000 | 30.0000 |
| **xz [mm]** | -12.8237 | -11.8832 | 11.7004 | 17.8471 |

| Sph = +5.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **xz [mm]** | -18.2779 | -11.9499 | 11.7829 | 17.9519 |
| **y = -10mm** | | | | |
| **x [mm]** | -30.0000 | -20.0000 | 20.0000 | 30.0000 |
| **xz [mm]** | -12.7057 | -12.2789 | 12.0264 | 18.3631 |

Ferner ist es bevorzugt, wenn alternativ oder zusätzlich die yx-Koordinate des Zentrums der Trajektorie (halbe Summe der minimalen und der maximalen y-Koordinate) kleiner als der Wert yz gemäß der folgenen Tabelle ist

| Sph = -4.0 dpt, Add = 1.0 dpt | | | | |
|---|---|---|---|---|
| **y = -5mm** | | | | |
| **x [mm]** | -30.0000 | -20.0000 | 20.0000 | 30.0000 |
| **yz [mm]** | -3.9197 | -3.9560 | -3.9576 | -3.9235 |
| **y = -10mm** | | | | |
| **x [mm]** | -30.0000 | -20.0000 | 20.0000 | 30.0000 |
| **yz [mm]** | -9.7598 | -9.8352 | -9.8493 | -9.7834 |

| Sph = -4.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **yz [mm]** | -3.9663 | -3.9993 | -3.9887 | -3.9561 |
| **y = -10mm** | | | | |
| **x [mm]** | -30.0000 | -20.0000 | 20.0000 | 30.0000 |
| **yz [mm]** | -9.9049 | -9.9681 | -9.9741 | -9.9176 |

| Sph = -4.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **yz [mm]** | -4.0196 | -4.0496 | -4.0167 | -3.9821 |
| **y = -10mm** | | | | |
| **x [mm]** | -30.0000 | -20.0000 | 20.0000 | 30.0000 |

(fortgesetzt)

| y = -10mm | | | | |
|---|---|---|---|---|
| yz [mm] | -10.0654 | -10.1113 | -10.0993 | -10.0540 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -4.5384 | -4.5218 | -4.5064 | -4.5176 |
| y = -10mm | | | | |
| x [mm] | -30.0000 | -20.0000 | 20.0000 | 30.0000 |
| yz [mm] | -11.3786 | -11.3388 | -11.3147 | -11.3468 |

| Sph = 0.5 dpt, Add = 2.0 dpt | | | | |
|---|---|---|---|---|
| y = - 5mm | | | | |
| x [mm] | -30.0000 | -20.0000 | 20.0000 | 30.0000 |
| yz [mm] | -4.6100 | -4.5783 | -4.5450 | -4.5643 |
| y = -10mm | | | | |
| x [mm] | -30.0000 | -20.0000 | 20.0000 | 30.0000 |
| yz [mm] | -11.5798 | -11.5070 | -11.4737 | -11.5325 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.7552 | -4.7015 | -4.6287 | -4.6610 |
| y = -10mm | | | | |
| x [mm] | -30.0000 | -20.0000 | 20.0000 | 30.0000 |
| yz [mm] | -11.9218 | -11.8067 | -11.7550 | -11.8468 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -5.5028 | -5.4121 | -5.3601 | -5.4312 |
| y = -10mm | | | | |
| x [mm] | -30.0000 | -20.0000 | 20.0000 | 30.0000 |
| yz [mm] | -18.8206 | -13.7124 | -13.6144 | -13.7883 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -5.7060 | -5.5826 | -5.5047 | -5.6056 |
| y = -10mm | | | | |
| x [mm] | -30.0000 | -20.0000 | 20.0000 | 30.0000 |
| yz [mm] | -18.9496 | -14.1505 | -14.0444 | -14.2803 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -5.9781 | -5.8024 | -5.6754 | -5.8106 |
| y = -10mm | | | | |
| x [mm] | -30.0000 | -20.0000 | 20.0000 | 30.0000 |
| yz [mm] | -19.0922 | -14.6873 | -14.5602 | -14.8518 |

In jedem Falle ist es bevorzugt, daß für nicht aufgeführte Verordnungen inter- bzw. extrapolierte Werte gelten.

**Kurze Beschreibung der Zeichnung**

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1        die Trajektorien für sphärische Brillengläser,
Fig. 2 - 5    die Trajektorien für bekannte progressive Brillengläser,

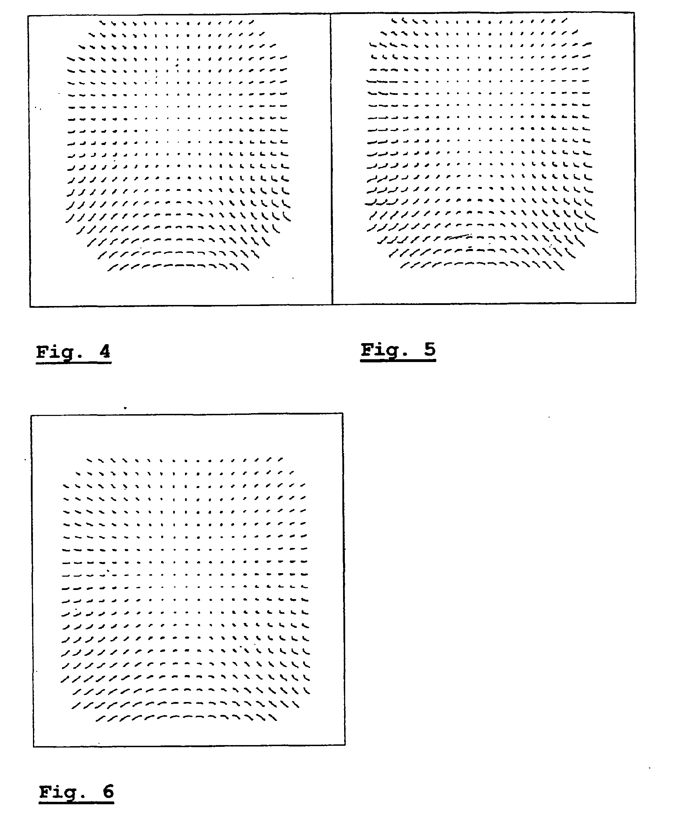

Fig. 6        die Trajektorien für ein erfindungsgemäßes progressives Brillenglas,

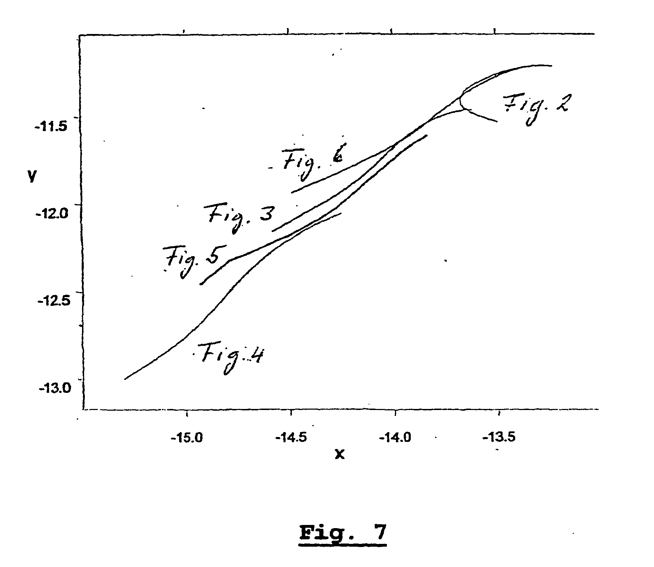

Fig. 7        eine Darstellung zum Vergleich des erfindungsgemäßen Brillenglases mit dem Stand der Technik, und

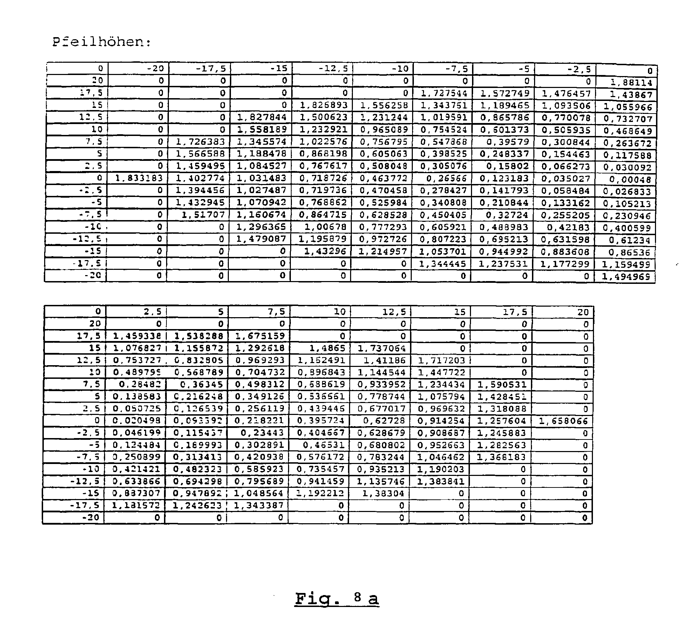

Fig. 8a       die Pfeilhöhe der progressiven Fläche eines konkreten Ausführungsbeispiels,

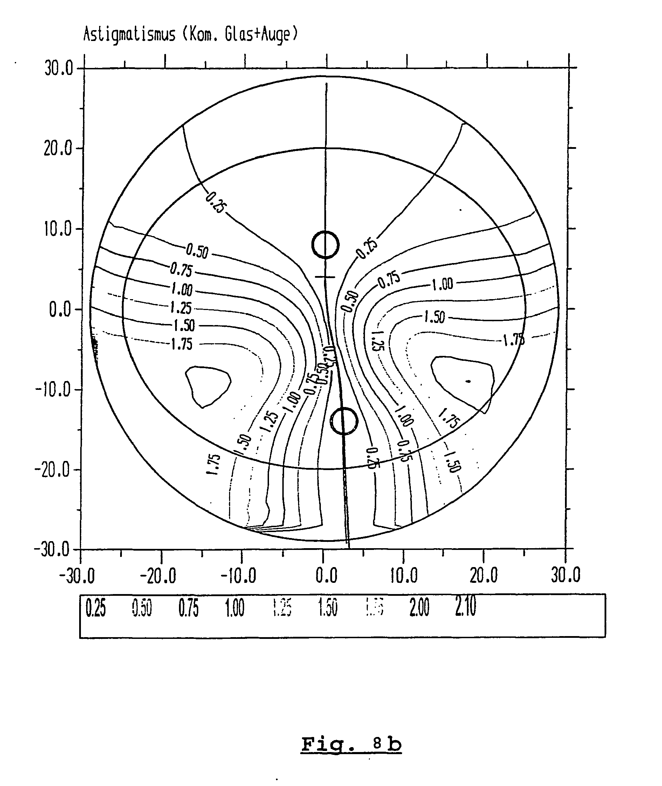

Fig. 8b       die Isolinien der astigmatischen Abweichung,

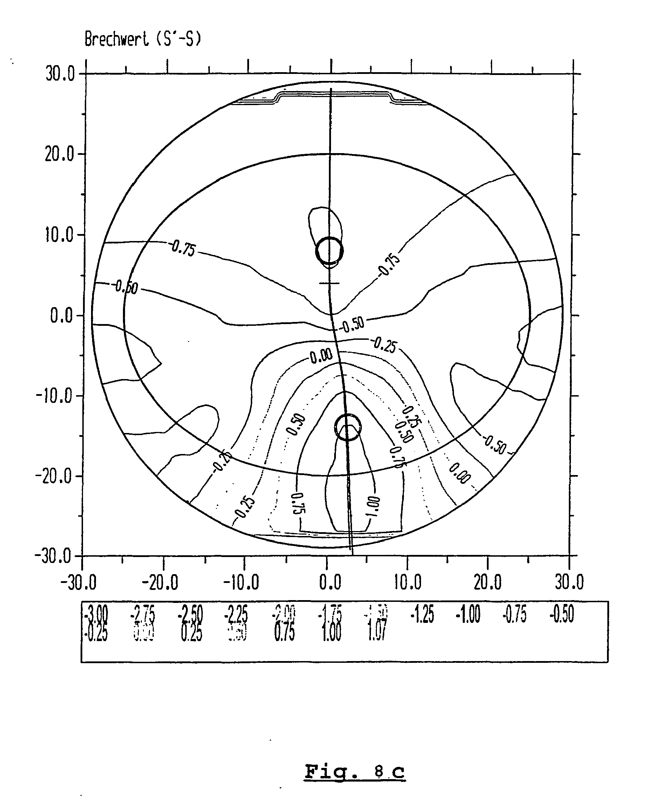

Fig. 8c       die Isolinien des mittleren Gebrauchswerts,

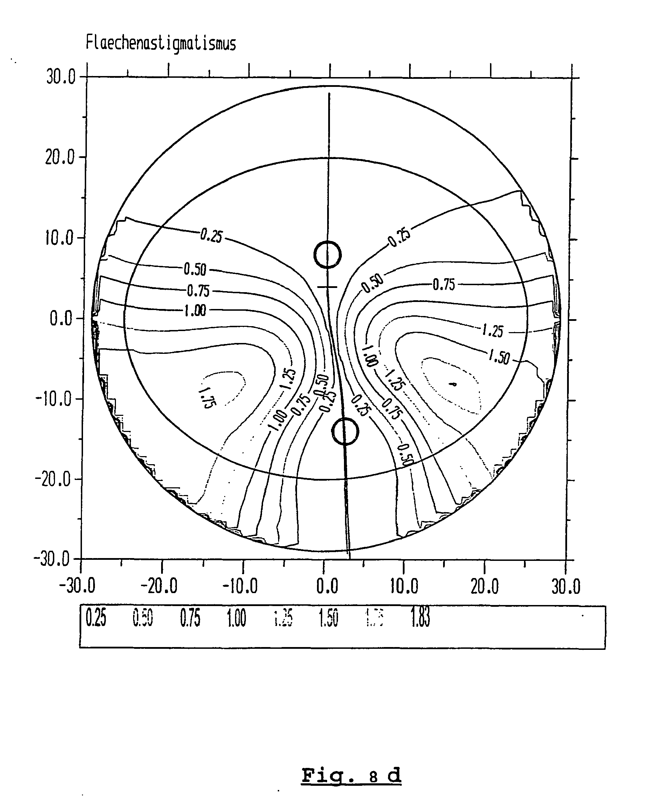

Fig. 8d       die Isolinien des Flächenastigmatismus, und

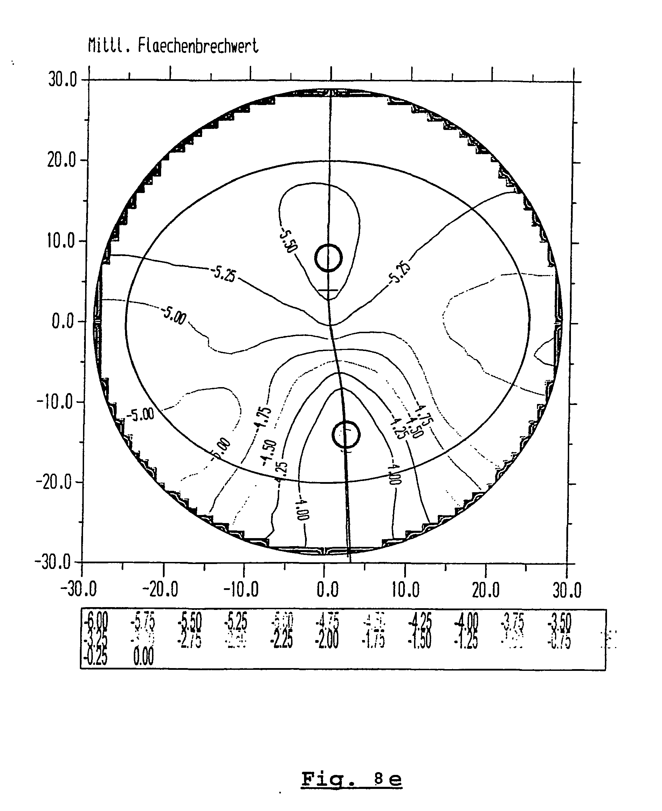

Fig. 8e       die Isolinien der mittleren Flächenbrechkraft für dieses Ausführungsbeispiel.

**Darstellung von Ausführungsbeispielen**

Fig. 6 zeigt die Trajektorien für ein erfindungsgemäßes Brillenglas, das dieselben optischen Werte wie die in den Figuren 2 bis 5 dargestellten herkömmlichen progressiven Brillengläser hat. Bereits dieser Darstellung zeigt, daß die Trajektorien wesentlich kürzer alsdann Stand der Technik sind und darüberhinaus deutlich gleichmäßiger verlaufen.
Dies soll anhand von Fig. 7 näher erläutert werden:
In dieser Abbildung sind die Kurven führt die in den Figuren 2 bis 5 dargestellten bekannten progressiven Brillengläser und das erfindungsgemäße Brillenglas vergrößert gezeichnet, sodaß die Unterschiede zwischen den Gläsern sehr viel klarer als in den Gitterplots werden, die mehr der Übersicht dienen, und die die Ortsabhängigkeit im Brillenglas demonstrieren.
Fig. 7 zeigt, daß deutliche Unterschiede in Eigenschaften wie Länge der (einzelnen) Bahnkurven, maximale und mittlere Steigung der Kurven, Position etc. bestehen.
Diese Unterschiede sind in den Ansprüchen tabellarisch für verschiedene Wirkungen und Additionen angegeben.
Exemplarisch sei dieser Vergleich anhand der Trajektorien veranschaulicht, die man vom stationären Punkt aus gesehen durch abzählen (5 nach unten, 6 nach links) erreicht. Der Objektpunkt, der auf die Mitte der Trajektorie abgebildet wird, hat dann die Koordinaten (-30mm,-25mm,-40mm). Er wird insgesamt um 70 mm horizontal bewegt, also von der Koordinate x = -65 mm bis x = 5 mm.

Bei dem in Fig. 2 dargestellten Brillenglas ist der "Kringel" in der rechten oberen Ecke.

Bei dem in Fig. 3 dargestellten Brillenglas ist die Trajektorie deutlich länger als bei dem in Fig. 2 dargestellten Brillenglas, allerdings ist sie langgestreckt, zeigt also nicht die störenden Effekte der Rückläufigkeit. Die Kurve ist überall monoton steigend. Beim Fixieren eines bewegten Objektpunktes bei ruhendem Kopf (oder bei entsprechender Kopfbewegung mit ruhendem Objekt) muß der Brillenträger den Blick also entsprechend der Kurve monoton senken oder anheben. Diese gleichmäßige, monotone Blickbewegung wird als angenehmer empfunden als die rückläufige, stark gekrümmte des in Fig. 2 dargestellten Brillenglases.

Das in Fig. 4 dargestellte Brillenglas zeigt ein ähnlich angenehmes Verhalten wie das Brillenglas gemäß Fig. 3. Allerdings ist anzumerken, daß die maximale Steigung größer ist als die gemäß Fig. 3. Bei der Blickbewegung erscheint also für den Träger das periphere Objekt sich in der gleichen Zeit schneller zu senken oder anzuheben als für den Träger eines Brillenglases gemäß Fig. 3. Betrachtet man benachbarte Trajektorien, so wird klar, daß Objekte auch schneller verzerren, und die Verzeichnung damit auffälliger wird.

Neben der größeren Steigung fällt auf, daß die Kurve deutlich weiter unten liegt, als die anderen. Die notwendige Blicksenkung ist größer als bei den anderen Produkten.

Das Brillenglas gemäß Fig. 5 besitzt ebenfalls eine relativ große maximale Steigung.

Das in Fig. 6 dargestellte erfindungsgemäße Brillenglas vermeidet alle beschriebenen Nachteile der anderen Gläser bei horizontalen Blickbewegungen: Die relativen Trajektorien zeichnen sich hier aus durch geringe Länge, Monotonie, kleinste mittlere und kleinste maximale Steigung bei gleichzeitig geringer Blicksenkung.

Das erfindungsgemäße progressive Brillenglas zeichnet sich also dadurch aus, daß die dynamische Verzeichnung bei horizontalen Blickbewegungen und die damit korrelierten Schaukelbewegungen möglichst gering sind.

Das in Fig. 8 beschriebene konkrete Ausführungsbeispiel weist im Fernbezugspunkt eine sphärische Wirkung (mittlerer Gebrauchswert) von -1 dpt und eine Addition A von 2 dpt auf. Eine astigmatische Verordnung ist nicht vorhanden. In allen Figuren ist die Abszisse (x-Achse) die horizontale Achse und die Ordinate (y-Achse) die vertikale Achse in Gebrauchsstellung.

Der Fern- und der Nahbezugspunkt sind in den Figuren 8 b-e jeweils mit Kreisen dargestellt, der Zentrierpunkt ist mit einem Kreuz bezeichnet - ihre Lage ist den Figuren zu entnehmen. Weiterhin ist der Verlauf der Hauptlinie eingezeichnet.

Die Teilfigur 8a gibt die Pfeilhöhe der progressiven augenseitigen Fläche für das Ausführungsbeispiel an. Unter Pfeilhöhe versteht man den Abstand eines Punktes mit den Koordinaten x und y (horizontale bzw. vertikale Achse in der Gebrauchsstellung des Brillenglases) von der Tangentialebene des Flächenscheitels. In der Tabelle sind jeweils in der linken Spalte die y-Werte (von - 20 bis +20 mm) und in der obersten Zeile ab der Spalte 2 folgende die x-Werte (von -20 bis + 20mm) aufgetragen. Die Pfeilhöhen sind ebenfalls in Millimeter angeben. Der Wert 0 bedeutet, daß für diese x,y-Koordinaten keine Pfeilhöhe angegeben wird.

Die Teilfigur 8b zeigt die astigmatische Abweichung innerhalb eines Kreises mit dem Radius 30 mm um einen Punkt, der 4 mm unterhalb des sogenannten Zentrierkreuzes liegt. Die astigmatische Abweichung ist. der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.

Die Teilfigur 8c zeigt entsprechend die Isolinien für den mittleren Gebrauchswert dieses Ausführungsbeispiels. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S`1 + S`2) - S$$

und ist ebenfalls in Form sogenannter Isolinien beginnend mit der Isolinie 0,75 dpt dargestellt.

Entsprechend sind in den Teilfiguren 8d und 8e die Isolinien der Flächendaten, nämlich der Flächenastigmatismus und der mittlere Flächenbrechwert dargestellt. Zur Definition dieser Flächendaten wird auf die einleitenden Ausführungen verwiesen.

Das in Fig. 8 dargestellte Ausführungsbeispiel weist folgende individualisierte Gebrauchsbedingungen auf:

| | |
|-----|------|
| D1x | 4,55 |
| D1y | 4,55 |

(fortgesetzt)

| N | 1,597 |
|---|---|
| D | 1,59 |
| DRP | 1,0 |
| PD | 63 |
| HSA | 15 |
| Vorneigung | 0 |

Hierbei bedeuten:

D1x     Brechwert der Vorderfläche in x-Richtung(dpt)
D1y     Brechwert der Vorderfläche in y-Richtung(dpt)
n        Brechungsindex des Glasmaterials
d        Mittendicke der Brillenlinse in mm
DRP    Dickenreduktionsprisma in cm/m
PD      Pupillenabstand in mm
HSA    Hornhaut/Scheitel-Abstand in mm

Vorneigungdes Brillenglases in Grad.

Selbstverständlich können die erfindungsgemäßen Verfahren auch auf die Berechnung und Herstellung von Brillengläsern mit zwei progressiven Flächen und/oder mit (zusätzlich) variierendem Brechnungsindex übertragen werden.

**Patentansprüche**

1.   Verfahren zum Herstellen eines Brillenglases mit

- einem zum Blicken in größere Entfernungen und insbesondere "ins Unendliche" ausgelegten Bereich, nachfolgend als "Fernteil" bezeichnet;
- einem zum Blicken in kürzere Entfernungen und insbesondere "Lese-Entfernungen" ausgelegten Bereich, nachfolgend als "Nahteil" bezeichnet;
- einer zwischen Fernteil und Nahteil angeordneten Progressionszone, in der die Wirkung des Brillenglases von dem Wert in einem im Fernteil gelegenen Fernbezugspunkt auf den Wert eines im Nahteil gelegenen Nahbezugspunktes längs einer zur Nase hin gewundenen Kurve, nachfolgend als "Hauptlinie" bezeichnet, zunimmt;

mit den Schritten:

- Vorgeben vom Gebrauchswerten, insbesondere eines Fernbezugspunktes und eines Nahbezugspunktes;
- Vorgeben eines Koordinatenursprungs im objektseitigen Scheitel des Glases;
- Herstellen des Brillenglases derart, daß

zur Minimierung der dynamischen Verzeichnung die Bahnkurven (Trajektorien relativ zum stationären Punkt bei (0,0)), die entstehen durch Verbinden der Schnittpunkte der bildseitigen Hauptstrahlen durch den Augendrehpunkt mit einer Projektionsebene im Abstand r vom objektseitigen Scheitel des Brillenglases bei Abbildung von horizontal bewegten Objektpunkten mit den Koordinaten (x-dx,y,s) zu Beginn der Bewegung und (x+dx,y,s) am Ende der Bewegung durch das progressive Brillenglas mit r= 0 mm, s= -40 mm und dx =35 mm, folgende Eigenschaften erfüllen:

Der Absolutbetrag der Differenz der minimalen und der maximalen y-Koordinate der Trajektorie ist kleiner als der in der nachfolgenden Tabelle angegebene Wert H:

| Sph = -4.0 dpt, Add = 1.0 dpt | | | | |
|---|---|---|---|---|
| **y = -5mm** | | | | |
| **x [mm]** | -30.0000 | -20.0000 | 20.0000 | 30.0000 |
| **H [mm]** | 0.1856 | 0.1233 | 0.0917 | 0.1602 |
| **y = -10mm** | | | | |
| **x [mm]** | -30.0000 | -20.0000 | 20.0000 | 30.0000 |
| **H [mm]** | 0.5294 | 0.3639 | 0.2681 | 0.4506 |

| Sph = -4.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **H [mm]** | 0.0578 | 0.0320 | 0.0032 | 0.0354 |
| **y = -10mm** | | | | |
| **x [mm]** | -30.0000 | -20.0000 | 20.0000 | 30.0000 |
| **H [mm]** | 0.3601 | 0.2496 | 0.1334 | 0.2765 |

| Sph = -4.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **H [mm]** | 0.0764 | 0.0648 | 0.0919 | 0.0754 |
| **y = -10mm** | | | | |
| **x [mm]** | -30.0000 | -20.0000 | 20.0000 | 30.0000 |
| **H [mm]** | 0.1425 | 0.1088 | 0.0297 | 0.0702 |

| Sph = 0.5 dpt, Add = 1.0 dpt | | | | |
|---|---|---|---|---|
| **y = -5mm** | | | | |
| **x [mm]** | -30.0000 | -20.0000 | 20.0000 | 30.0000 |
| **H [mm]** | 0.2399 | 0.1645 | 0.1494 | 0.2164 |
| **y = -10mm** | | | | |
| **x [mm]** | -30.0000 | -20.0000 | 20.0000 | 30.0000 |
| H [mm] | 0.4250 | 0.2887 | 0.2684 | 0.3859 |

| Sph = 0.5 dpt, Add = 2.0 dpt | | | | |
|---|---|---|---|---|
| **y = -5mm** | | | | |
| **x [mm]** | -30.0000 | -20.0000 | 20.0000 | 30.0000 |
| **H [mm]** | 0.4535 | 0.3059 | 0.2945 | 0.4156 |

(fortgesetzt)

| y = -10mm | | | | |
|---|---|---|---|---|
| x [mm] | -30.0000 | -20.0000 | 20.0000 | 30.0000 |
| H [mm] | 0.7102 | 0.4717 | 0.4802 | 0.6734 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 0.7038 | 0.4646 | 0.4508 | 0.6353 |
| y = -10mm | | | | |
| x [mm] | -30.0000 | -20.0000 | 20.0000 | 30.0000 |
| H [mm] | 1.0653 | 0.6846 | 0.7621 | 1.0458 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.8607 | 0.5828 | 0.4944 | 0.7478 |
| y = -10mm | | | | |
| x [mm] | -30.0000 | -20.0000 | 20.0000 | 30.0000 |
| H [mm] | 11.6223 | 1.2440 | 1.0375 | 1.5808 |

| Sph = +5.0 dpt, Add = 2.0 dpt | | | | |
|---|---|---|---|---|
| y = - 5mm | | | | |
| x [mm] | -30.0000 | -20.0000 | 20.0000 | 30.0000 |
| H [mm] | 1.1921 | 0.7903 | 0.7106 | 1.0740 |
| y = -10mm | | | | |
| x [mm] | -30.0000 | -20.0000 | 20.0000 | 30.0000 |
| H [mm] | 11.3204 | 1.5119 | 1.3512 | 2.0477 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 1.6290 | 1.0524 | 0.9997 | 1.4771 |
| y = -10mm | | | | |
| x [mm] | -30.0000 | -20.0000 | 20.0000 | 30.0000 |
| H [mm] | 10.9637 | 1.8600 | 1.8110 | 2.6494 |

2. Verfahren Anspruch 1,
**dadurch gekennzeichnet, daß** die Bogenlänge der Trajektorie kürzer als der in der nachfolgenden Tabelle angegebene Wert L ist:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |
| L [mm] | 1.8098 | 1.1431 | 1.1008 | 1.6803 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.7463 | 1.1216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 0.6897 | 0.4330 | 0.3721 | 0.5844 |
| y = -10mm | | | | |
| x [mm] | -30.0000 | -20.0000 | 20.0000 | 30.0000 |
| L [mm] | 0.8672 | 0.6191 | 0.4724 | 0.6851 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 0.9082 | 0.5691 | 0.4604 | 0.7418 |
| y = -10mm | | | | |
| x [mm] | -30.0000 | -20.0000 | 20.0000 | 30.0000 |
| L [mm] | 1.3123 | 0.9671 | 0.7530 | 0.9919 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.2493 | 0.8136 | 0.6038 | 0.9704 |
| y = -10mm | | | | |
| x [mm] | -30.0000 | -20.0000 | 20.0000 | 30.0000 |
| L [mm] | 1.9289 | 1.4589 | 1.1334 | 1.4221 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 3.7402 | 2.2660 | 2.0300 | 3.2926 |
| y = -10mm | | | | |
| x [mm] | -30.0000 | -20.0000 | 20.0000 | 30.0000 |
| L [mm] | 17.0238 | 2.8339 | 2.3619 | 3.7662 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 4.1363 | 2.4717 | 2.1643 | 3.6054 |
| y = -10mm | | | | |
| x [mm] | -30.0000 | -20.0000 | 20.0000 | 30.0000 |
| L [mm] | 17.7989 | 3.2727 | 2.6076 | 4.2396 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 4.6985 | 2.8115 | 2.3838 | 3.9886 |

(fortgesetzt)

| y = -10mm | | | | |
|---|---|---|---|---|
| x [mm] | -30.0000 | -20.0000 | 20.0000 | 30.0000 |
| L [mm] | 19.1536 | 3.9888 | 3.0181 | 4.7864 |

**3.** Verfarhen nach Anspruch 1 oder 2,
   **dadurch gekennzeichnet, daß** die mittlere Steigung der Trajektorie kleiner als der in der nachfolgenden Tabelle angegebene Wert m ist:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| m | 0.1504 | 0.2091 | -0.2338 | -0.1701 |
| y = -10mm | | | | |
| x [mm] | -30.0000 | -20.0000 | 20.0000 | 30.0000 |
| m | 0.3796 | 0.5037 | -0.4935 | -0.4012 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.0486 | 0.0601 | 0.0086 | -0.0375 |
| y = -10mm | | | | |
| x [mm] | -30.0000 | -20.0000 | 20.0000 | 30.0000 |
| m | 0.2906 | 0.4609 | -0.3178 | -0.2642 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| m | -0.0698 | -0.1448 | 0.2513 | 0.0771 |
| y = -10mm | | | | |
| x [mm] | -30.0000 | -20.0000 | 20.0000 | 30.0000 |
| m | 0.1408 | 0.3482 | 0.0943 | -0.0701 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| m | 0.4286 | 0.5223 | -0.8628 | -0.6280 |

(fortgesetzt)

| y = -10mm | | | | |
|---|---|---|---|---|
| x [mm] | -30.0000 | -20.0000 | 20.0000 | 30.0000 |
| m | 0.5658 | 0.5608 | -0.7568 | -0.7614 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| m | 0.6271 | 0.7017 | -1.2670 | -1.0635 |
| y = -10mm | | | | |
| x [mm] | -30.0000 | -20.0000 | 20.0000 | 30.0000 |
| m | 0.6496 | 0.5786 | -0.8596 | -0.9913 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| M | 0.2821 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.3463 | 0.4457 | -0.6708 | -0.4628 |
| y = -10mm | | | | |
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671 |

**4.** Verfahren nach einem der Ansprüche 1 bis 3, **dadurch gekennzeichnet, daß** die maximale Steigung der Trajektorie kleiner als der in der nachfolgenden Tabelle angegebene Wert M ist:

| Sph = -4.0 dpt, Add = 1.0 dpt | | | | |
|---|---|---|---|---|
| y = -10mm | | | | |
| x [mm] | -30.0000 | -20.0000 | 20.0000 | 30.0000 |
| M | 6.7715 | 0.7457 | -0.4274 | -0.5090 |

| Sph = -4.0 dpt, Add = 2.0 dpt | | | | |
|---|---|---|---|---|
| y = -10mm | | | | |
| x [mm] | -30.0000 | -20.0000 | 20.0000 | 30.0000 |
| M | 0.2870 | 0.4403 | 0.1951 | -0.3184 |

| Sph = -4.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.2179 | -0.0023 | 1.4361 | 13.7067 |

| Sph = 0.5 dpt, Add = 1.0 dpt | | | | |
|---|---|---|---|---|
| y = -10mm | | | | |
| x [mm] | -30.0000 | -20.0000 | 20.0000 | 30.0000 |
| M | 0.8577 | 0.7249 | -1.1962 | -11.5313 |

| Sph = 0.5 dpt, Add = 2.0 dpt | | | | |
|---|---|---|---|---|
| y = -10mm | | | | |
| x [mm] | -30.0000 | -20.0000 | 20.0000 | 30.0000 |
| M | 0.9196 | 0.9184 | -1.3399 | -2.8994 |

| Sph = 0.5 dpt, Add = 3.0 dpt | | | | |
|---|---|---|---|---|
| y = -10mm | | | | |
| x [mm] | -30.0000 | -20.0000 | 20.0000 | 30.0000 |
| M | 1.0969 | 1.0391 | -1.9120 | -4.9332 |

| Sph = +5.0 dpt, Add = 1.0 dpt | | | | |
|---|---|---|---|---|
| y = -10mm | | | | |
| x [mm] | -30.0000 | -20.0000 | 20.0000 | 30.0000 |
| M | 1.9493 | 6.1058 | -1.9300 | -1.7983 |

| Sph = +5.0 dpt, Add = 2.0 dpt | | | | |
|---|---|---|---|---|
| y = -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -7.1729 | -7.8544 |

5. Verfahren nach einem der Ansprüche 1 bis 4,
**dadurch gekennzeichnet, daß** die x-Koordinate des Zentrums der Trajektorie (halbe Summe der minimalen und der maximalen x-Koordinate) kleiner als der Wert xz gemäß der folgenen Tabelle ist

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xz [mm] | -11.2191 | -7.5330 | 7.5648 | 11.2896 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -11.3556 | -7.6222 | 7.6442 | 11.4147 |

(fortgesetzt)

| y = -10mm | | | | |
|---|---|---|---|---|
| x [mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -13.7030 | -9.1089 | 9.0833 | 13.6540 |
| y = -10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -13.7989 | -9.1581 | 9.1193 | 13.7287 |
| y = -10mm | | | | |
| x [mm] | -30.0000 | -20.0000 | 20.0000 | 30.0000 |
| xz [mm] | -13.9392 | -9.2439 | 9.1778 | 13.8389 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -14.0239 | -9.2904 | 9.2212 | 13.9123 |
| y = -10mm | | | | |
| x [mm] | -30.0000 | -20.0000 | 20.0000 | 30.0000 |
| xz [mm] | -14.2516 | -9.4367 | 9.3185 | 14.0854 |

| Sph = +5.0 dpt, Add = 1.0 dpt | | | | |
|---|---|---|---|---|
| **y = -5mm** | | | | |
| **x [mm]** | -30.0000 | -20.0000 | 20.0000 | 30.0000 |
| **xz [mm]** | -17.3295 | -11.3902 | 11.2874 | 17.1168 |
| **y = -10mm** | | | | |
| **x [mm]** | -30.0000 | -20.0000 | 20.0000 | 30.0000 |
| **xz [mm]** | -12.9054 | -11.5804 | 11.4231 | 17.3537 |

| Sph = +5.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **xz [mm]** | -17.7640 | -11.6405 | 11.5155 | 17.5159 |
| **y = -10mm** | | | | |
| **x [mm]** | -30.0000 | -20.0000 | 20.0000 | 30.0000 |
| **xz [mm]** | -12.8237 | -11.8832 | 11.7004 | 17.8471 |

| Sph = +5.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **xz [mm]** | -18.2779 | -11.9499 | 11.7829 | 17.9519 |
| **y = -10mm** | | | | |
| **x [mm]** | -30.0000 | -20.0000 | 20.0000 | 30.0000 |
| **xz [mm]** | -12.7057 | -12.2789 | 12.0264 | 18.3631 |

**6.** Verfahren nach einem der Ansprüche 1 bis 5,
**dadurch gekennzeichnet, daß** die yx-Koordinate des Zentrums der Trajektorie (halbe Summe der minimalen und der maximalen y-Koordinate) kleiner als der Wert yz gemäß der folgenen Tabelle ist

| Sph = -4.0 dpt, Add = 1.0 dpt | | | | |
|---|---|---|---|---|
| **y = -5mm** | | | | |
| **x [mm]** | -30.0000 | -20.0000 | 20.0000 | 30.0000 |
| **yz [mm]** | -3.9197 | -3.9560 | -3.9576 | -3.9235 |
| **y = -10mm** | | | | |
| **x [mm]** | -30.0000 | -20.0000 | 20.0000 | 30.0000 |
| **yz [mm]** | -9.7598 | -9.8352 | -9.8493 | -9.7834 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -3.9663 | -3.9993 | -3.9887 | -3.9561 |
| y = -10mm | | | | |
| x [mm] | -30.0000 | -20.0000 | 20.0000 | 30.0000 |
| yz [mm] | -9.9049 | -9.9681 | -9.9741 | -9.9176 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.0196 | -4.0496 | -4.0167 | -3.9821 |
| y = -10mm | | | | |
| x [mm] | -30.0000 | -20.0000 | 20.0000 | 30.0000 |
| yz [mm] | -10.0654 | -10.1113 | -10.0993 | -10.0540 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -4.5384 | -4.5218 | -4.5064 | -4.5176 |
| y = -10mm. | | | | |
| x [mm] | -30.0000 | -20.0000 | 20.0000 | 30.0000 |
| yz [mm] | -11.3786 | -11.3388 | -11.3147 | -11.3468 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -4.6100 | -4.5783 | -4.5450 | -4.5643 |
| y = -10mm | | | | |
| x [mm] | -30.0000 | -20.0000 | 20.0000 | 30.0000 |
| yz [mm] | -11.5798 | -11.5070 | -11.4737 | -11.5325 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.7552 | -4.7015 | -4.6287 | -4.6610 |

(fortgesetzt)

| y = -10mm | | | | |
|---|---|---|---|---|
| x [mm] | -30.0000 | -20.0000 | 20.0000 | 30.0000 |
| yz [mm] | -11.9218 | -11.8067 | -11.7550 | -11.8468 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -5.5028 | -5.4121 | -5.3601 | -5.4312 |
| y = -10mm | | | | |
| x [mm] | -30.0000 | -20.0000 | 20.0000 | 30.0000 |
| yz [mm] | -18.8206 | -13.7124 | -13.6144 | -13.7883 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -5.7060 | -5.5826 | -5.5047 | -5.6056 |
| y = -10nnn | | | | |
| x [mm] | -30.0000 | -20.0000 | 20.0000 | 30.0000 |
| yz [mm] | -18.9496 | -14.1505 | -14.0444 | -14.2803 |

| Sph = +5.0 dpt, Add = 3.0 dpt | | | | |
|---|---|---|---|---|
| Y = -5mm | | | | |
| X [mm] | -30.0000 | -20.0000 | 20.0000 | 30.0000 |
| Yz [mm] | -5.9781 | -5.8024 | -5.6754 | -5.8106 |
| Y = -10mm | | | | |
| X [mm] | -30.0000 | -20.0000 | 20.0000 | 30.0000 |
| Yz [mm] | -19.0922 | -14.6873 | -14.5602 | -14.8518 |

**7.** Verfahren nach einem der Ansprüche 1 bis 6,
**dadurch gekennzeichnet, daß** für nicht aufgeführte Verordnungen inter- bzw. extrapolierte Werte gelten.

**8.** Brillenglas mit

- einem zum Blicken in größere Entfernungen und insbesondere "ins Unendliche" ausgelegten Bereich (Fernteil),
- einem zum Blicken in kürzere Entfernungen und insbesondere "Lese-Entfernungen" ausgelegten Bereich (Nahteil), und
- einer zwischen Fernteil und Nahteil angeordneten Progressionszone, in der die Wirkung des Brillenglases von dem Wert in dem im Fernteil gelegenen Fernbezugspunkt auf den Wert des im Nahteil gelegenen Nahbezugspunktes längs einer zur Nase hin gewundenen Kurve (Hauptlinie) zunimmt,
wobei das Brillenglas für standardisierte fibrauchswerte gemäß DIN 58 208, Teil 2, ausgelegt ist, und der Koordinatenursprung im objektseitigen Scheitel des Brillenglases angenommen wird,

**dadurch gekennzeichnet, daß** zur Minimierung der dynamischen Verzeichnung die Bahnkurven (Trajektorien relativ zum stationären Punkt bei (0,0)), die entstehen durch Verbinden der Schnittpunkte der bildseitigen Hauptstrahlen durch den Augendrehpunkt mit einer Projektionsebene im Abstand r vom objektseitigen Scheitel des Brillenglases bei Abbildung von horizontal bewegten Objektpunkten mit den Koordinaten (x-dx,y,s) zu Beginn der Bewegung und (x+dx,y,s) am Ende der Bewegung durch das progressive Brillenglas mit r= 0 mm, s= -40 mm und dx = 35 mm, folgende Eigenschaften erfüllen: Der Absolutbetrag der Differenz der minimalen und der maximalen y-Koordinate der Trajektorie ist kleiner als der in der nachfolgenden Tabelle angegebene Wert H:

| Sph = -4.0 dpt, Add = 1.0 dpt | | | | |
| --- | --- | --- | --- | --- |
| y = -5mm | | | | |
| x [mm] | -30.0000 | -20.0000 | 20.0000 | 30.0000 |
| H [mm] | 0.1856 | 0.1233 | 0.0917 | 0.1602 |
| y = -10mm | | | | |
| x [mm] | -30.0000 | -20.0000 | 20.0000 | 30.0000 |
| H [mm] | 0.5294 | 0.3639 | 0.2681 | 0.4506 |

| Sph = -4.0 dpt, Add = 2.0 dpt | | | | |
| --- | --- | --- | --- | --- |
| y = -5mm | | | | |
| x [mm] | -30.0000 | -20.0000 | 20.0000 | 30.0000 |
| H [mm] | 0.0578 | 0.0320 | 0.0032 | 0.0354 |
| y = -10mm | | | | |
| x [mm] | -30.0000 | -20.0000 | 20.0000 | 30.0000 |
| H [mm] | 0.3601 | 0.2496 | 0.1334 | 0.2765 |

| Sph = -4.0 dpt, Add = 3.0 dpt | | | | |
| --- | --- | --- | --- | --- |
| y = -5mm | | | | |
| x [mm] | -30.0000 | -20.0000 | 20.0000 | 30.0000 |
| H [mm] | 0.0764 | 0.0648 | 0.0919 | 0.0754 |
| y = -10mm | | | | |
| x [mm] | -30.0000 | -20.0000 | 20.0000 | 30.0000 |
| H [mm] | 0.1425 | 0.1088 | 0.0297 | 0.0702 |

| Sph = 0.5 dpt, Add = 1.0 dpt | | | | |
| --- | --- | --- | --- | --- |
| y = -5mm | | | | |
| x [mm] | -30.0000 | -20.0000 | 20.0000 | 30.0000 |
| H [mm] | 0.2399 | 0.1645 | 0.1494 | 0.2164 |
| y = -10mm | | | | |
| x [mm] | -30.0000 | -20.0000 | 20.0000 | 30.0000 |

(fortgesetzt)

| y = -10mm | | | | |
|---|---|---|---|---|
| H [mm] | 0.4250 | 0.2887 | 0.2684 | 0.3859 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| H [mm] | 0.4535 | 0.3059 | 0.2945 | 0.4156 |
| y = -10mm | | | | |
| x [mm] | -30.0000 | -20.0000 | 20.0000 | 30.0000 |
| H [mm] | 0.7102 | 0.4717 | 0.4802 | 0.6734 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 0.7038 | 0.4646 | 0.4508 | 0.6353 |
| y = -10mm | | | | |
| x [mm] | -30.0000 | -20.0000 | 20.0000 | 30.0000 |
| H [mm] | 1.0653 | 0.6846 | 0.7621 | 1.0458 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.8607 | 0.5828 | 0.4944 | 0.7478 |
| y = -10mm | | | | |
| x [mm] | -30.0000 | -20.0000 | 20.0000 | 30.0000 |
| H [mm] | 11.6223 | 1.2440 | 1.0375 | 1.5808 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| H [mm] | 1.1921 | 0.7903 | 0.7106 | 1.0740 |
| y = -10mm | | | | |
| x [mm] | -30.0000 | -20.0000 | 20.0000 | 30.0000 ; |
| H [mm] | 11.3204 | 1.5119 | 1.3512 | 2.0477 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 1.6290 | 1.0524 | 0.9997 | 1.4771 |
| y = -10mm | | | | |
| x [mm] | -30.0000 | -20.0000 | 20.0000 | 30.0000 |
| H [mm] | 10.9637 | 1.8600 | 1.8110 | 2.6494 |

9. Brillenglas nach Anspruch 8,
**dadurch gekennzeichnet, daß** die Bogenlänge der Trajektorie kürzer als der in der nachfolgenden Tabelle angegebene Wert L ist:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |
| L [mm] | 1.8098 | 1.1431 | 1.1008 | 1.6803 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.7463 | 1.1216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 0.6897 | 0.4330 | 0.3721 | 0.5844 |
| y = -10mm | | | | |
| x [mm] | -30.0000 | -20.0000 | 20.0000 | 30.0000 |
| L [mm] | 0.8672 | 0.6191 | 0.4724 | 0.6851 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 0.9082 | 0.5691 | 0.4604 | 0.7418 |
| y = -10mm | | | | |
| x [mm] | -30.0000 | -20.0000 | 20.0000 | 30.0000 |
| L [mm] | 1.3123 | 0.9671 | 0.7530 | 0.9919 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.2493 | 0.8136 | 0.6038 | 0.9704 |
| y = -10mm | | | | |
| x [mm] | -30.0000 | -20.0000 | 20.0000 | 30.0000 |
| L [mm] | 1.9289 | 1.4589 | 1.1334 | 1.4221 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 3.7402 | 2.2660 | 2.0300 | 3.2926 |
| y = -10mm | | | | |
| x [mm] | -30.0000 | -20.0000 | 20.0000 | 30.0000 |
| L [mm] | 17.0238 | 2.8339 | 2.3619 | 3.7662 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 4.1363 | 2.4717 | 2.1643 | 3.6054 |

(fortgesetzt)

| y = -10mm | | | | |
|---|---|---|---|---|
| x [mm] | -30.0000 | -20.0000 | 20.0000 | 30.0000 |
| L [mm] | 17.7989 | 3.2727 | 2.6076 | 4.2396 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 4.6985 | 2.8115 | 2.3838 | 3.9886 |
| y = -10mm | | | | |
| x [mm] | -30.0000 | -20.0000 | 20.0000 | 30.0000 |
| L [mm] | 19.1536 | 3.9888 | 3.0181 | 4.7864 |

10. Brillenglas nach Anspruch 8 oder 9,
**dadurch gekennzeichnet, daß** die mittlere Steigung der Trajektorie kleiner als der in der nachfolgenden Tabelle angegebene Wert m ist:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| m | 0.1504 | 0.2091 | -0.2338 | -0.1701 |
| y = -10mm | | | | |
| x [mm] | -30.0000 | -20.0000 | 20.0000 | 30.0000 |
| m | 0.3796 | 0.5037 | -0.4935 | -0.4012 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.0486 | 0.0601 | 0.0086 | -0.0375 |
| y = -10mm | | | | |
| x [mm] | -30.0000 | -20.0000 | 20.0000 | 30.0000 |
| m | 0.2906 | 0.4609 | -0.3178 | -0.2642 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| m | -0.0698 | -0.1448 | 0.2513 | 0.0771 |

(fortgesetzt)

| y = - 10mm | | | | |
|---|---|---|---|---|
| x [mm] | -30.0000 | -20.0000 | 20.0000 | 30.0000 |
| m | 0.1408 | 0.3482 | 0.0943 | -0.0701 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| m | 0.4286 | 0.5223 | -0.8628 | -0.6280 |
| y = -10mm | | | | |
| x [mm] | -30.0000 | -20.0000 | 20.0000 | 30.0000 |
| m | 0.5658 | 0.5608 | -0.7568 | -0.7614 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| m | 0.6271 | 0.7017 | -1.2670 | -1.0635 |
| y = -10mm | | | | |
| x [mm] | -30.0000 | -20.0000 | 20.0000 | 30.0000 |
| m | 0.6496 | 0.5786 | -0.8596 | -0.9913 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| M | 0.2821 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
| --- | --- | --- | --- | --- |
| y = -5mm | | | | |
| x [mm] | -30.0000 | -20.0000 | 20.0000 | 30.0000 |
| m | 0.3463 | 0.4457 | -0.6708 | -0.4628 |
| y = -10mm | | | | |
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
| --- | --- | --- | --- | --- |
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671 |

11. Brillenglas nach einem der Ansprüche 8 bis 10,
**dadurch gekennzeichnet, daß** die maximale Steigung der Trajektorie kleiner als der in der nachfolgenden Tabelle angegebene Wert M ist:

| Sph = -4.0 dpt, Add = 1.0 dpt | | | | |
| --- | --- | --- | --- | --- |
| y = -10mm | | | | |
| x [mm] | -30.0000 | -20.0000 | 20.0000 | 30.0000 |
| M | 6.7715 | 0.7457 | -0.4274 | -0.5090 |

| Sph = -4.0 dpt, Add = 2.0 dpt | | | | |
| --- | --- | --- | --- | --- |
| y = -10mm | | | | |
| x [mm] | -30.0000 | -20.0000 | 20.0000 | 30.0000 |
| M | 0.2870 | 0.4403 | 0.1951 | -0.3184 |

| Sph = -4.0 dpt, Add = 3.0 dpt | | | | |
| --- | --- | --- | --- | --- |
| y = -10mm | | | | |
| x [mm] | -30.0000 | -20.0000 | 20.0000 | 30.0000 |
| M | 0.2179 | -0.0023 | 1.4361 | 13.7067 |

| Sph = 0.5 dpt, Add = 1.0 dpt | | | | |
|---|---|---|---|---|
| y = -10mm | | | | |
| x [mm] | -30.0000 | -20.0000 | 20.0000 | 30.0000 |
| M | 0.8577 | 0.7249 | -1.1962 | -11.5313 |

| Sph = 0.5 dpt, Add = 2.0 dpt | | | | |
|---|---|---|---|---|
| y = -10mm | | | | |
| x [mm] | -30.0000 | -20.0000 | 20.0000 | 30.0000 |
| M | 0.9196 | 0.9184 | -1.3399 | -2.8994 |

| Sph = 0.5 dpt, Add = 3.0 dpt | | | | |
|---|---|---|---|---|
| y = -10mm | | | | |
| x [mm] | -30.0000 | -20.0000 | 20.0000 | 30.0000 |
| M | 1.0969 | 1.0391 | -1.9120 | -4.9332 |

| Sph = +5.0 dpt, Add = 1.0 dpt | | | | |
|---|---|---|---|---|
| y = -10mm | | | | |
| x [mm] | -30.0000 | -20.0000 | 20.0000 | 30.0000 |
| M | 1.9493 | 6.1058 | -1.9300 | -1.7983 |

| Sph = +5.0 dpt, Add = 2.0 dpt | | | | |
|---|---|---|---|---|
| y = -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -7.1729 | -7.8544 |

12. Brillenglas nach einem der Ansprüche 8 bis 11,
**dadurch gekennzeichnet, daß** die x-Koordinate des Zentrums der Trajektorie (halbe Summe der minimalen und der maximalen x-Koordinate) kleiner als der Wert xz gemäß der folgenen Tabelle ist

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |

(fortgesetzt)

| Sph = -4.0 dpt, Add = 1.0 dpt | | | | |
| --- | --- | --- | --- | --- |
| y = -5mm | | | | |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xz [mm] | -11.2191 | -7.5330 | 7.5648 | 11.2896 |

| Sph = -4.0 dpt, Add = 2.0 dpt | | | | |
| --- | --- | --- | --- | --- |
| y = -5mm | | | | |
| x [mm] | -30.0000 | -20.0000 | 20.0000 | 30.0000 |
| xz [mm] | -11.3556 | -7.6222 | 7.6442 | 11.4147 |
| y = -10mm | | | | |
| x [mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
| --- | --- | --- | --- | --- |
| y = -5mm | | | | |
| x [mm] | -30.0000 | -20.0000 | 20.0000 | 30.0000 |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
| --- | --- | --- | --- | --- |
| y = -5mm | | | | |
| x [mm] | -30.0000 | -20.0000 | 20.0000 | 30.0000 |
| xz [mm] | -13.7030 | -9.1089 | 9.0833 | 13.6540 |
| y = -10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add = 2.0 dpt | | | | |
| --- | --- | --- | --- | --- |
| y = -5mm | | | | |
| x [mm] | -30.0000 | -20.0000 | 20.0000 | 30.0000 |
| xz [mm] | -13.7989 | -9.1581 | 9.1193 | 13.7287 |

(fortgesetzt)

| y = -10mm | | | | |
|---|---|---|---|---|
| **x [mm]** | -30.0000 | -20.0000 | 20.0000 | 30.0000 |
| **xz [mm]** | -13.9392 | -9.2439 | 9.1778 | 13.8389 |

| Sph = 0.5 dpt, Add = 3.0 dpt | | | | |
|---|---|---|---|---|
| **y = -5mm** | | | | |
| **x [mm]** | -30.0000 | -20.0000 | 20.0000 | 30.0000 |
| **xz [mm]** | -14.0239 | -9.2904 | 9.2212 | 13.9123 |
| **y = -10mm** | | | | |
| **x [mm]** | -30.0000 | -20.0000 | 20.0000 | 30.0000 |
| **xz [mm]** | -14.2516 | -9.4367 | 9.3185 | 14.0854 |

| Sph = +5.0 dpt, Add = 1.0 dpt y = -5mm | | | | |
|---|---|---|---|---|
| **x [mm]** | -30.0000 | -20.0000 | 20.0000 | 30.0000 |
| **xz [mm]** | -17.3295 | -11.3902 | 11.2874 | 17.1168 |
| **y = -10mm** | | | | |
| **x [mm]** | -30.0000 | -20.0000 | 20.0000 | 30.0000 |
| **xz [mm]** | -12.9054 | -11.5804 | 11.4231 | 17.3537 |

| Sph = +5.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **xz [mm]** | -17.7640 | -11.6405 | 11.5155 | 17.5159 |
| **y = -10mm** | | | | |
| **x [mm]** | -30.0000 | -20.0000 | 20.0000 | 30.0000 |
| **xz [mm]** | -12.8237 | -11.8832 | 11.7004 | 17.8471 |

| Sph = +5.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **xz [mm]** | -18.2779 | -11.9499 | 11.7829 | 17.9519 |
| **y = -10mm** | | | | |
| **x [mm]** | -30.0000 | -20.0000 | 20.0000 | 30.0000 |
| **xz [mm]** | -12.7057 | -12.2789 | 12.0264 | 18.3631 |

**13.** Brillenglas nach einem der Ansprüche 8 bis 12,

**dadurch gekennzeichnet, daß** die yx-Koordinate des Zentrums der Trajektorie (halbe Summe der minimalen und der maximalen y-Koordinate) kleiner als der Wert yz gemäß der folgenen Tabelle ist

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -3.9197 | -3.9560 | -3.9576 | -3.9235 |
| y = -10mm | | | | |
| x [mm] | -30.0000 | -20.0000 | 20.0000 | 30.0000 |
| yz [mm] | -9.7598 | -9.8352 | -9.8493 | -9.7834 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -3.9663 | -3.9993 | -3.9887 | -3.9561 |
| y = -10mm | | | | |
| x [mm] | -30.0000 | -20.0000 | 20.0000 | 30.0000 |
| yz [mm] | -9.9049 | -9.9681 | -9.9741 | -9.9176 |

| Sph = -4.0 dpt, Add = 3.0 dpt | | | | |
|---|---|---|---|---|
| y = - -5mm | | | | |
| x [mm] | -30.0000 | -20.0000 | 20.0000 | 30.0000 |
| yz [mm] | -4.0196 | -4.0496 | -4.0167 | -3.9821 |
| y = -10mm | | | | |
| x [mm] | -30.0000 | -20.0000 | 20.0000 | 30.0000 |
| yz [mm] | -10.0654 | -10.1113 | -10.0993 | -10.0540 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -4.5384 | -4.5218 | -4.5064 | -4.5176 |
| y = -10mm | | | | |
| x [mm] | -30.0000 | -20.0000 | 20.0000 | 30.0000 |
| yz [mm] | -11.3786 | -11.3388 | -11.3147 | -11.3468 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |

(fortgesetzt)

| Sph = 0.5 dpt, Add = 2.0 dpt | | | |
|---|---|---|---|
| y = -5mm | | | |
| yz [mm]     -4.6100     -4.5783     -4.5450     -4.5643 | | | |
| y = -10mm | | | |
| x [mm] | -30.0000 | -20.0000 | 20.0000 | 30.0000 |
| yz [mm] | -11.5798 | -11.5070 | -11.4737 | -11.5325 |

| Sph = 0.5 dpt, Add = 3.0 dpt | | | |
|---|---|---|---|
| y = -5mm | | | |
| x [mm] | -30.0000 | -20.0000 | 20.0000 | 30.0000 |
| yz [mm] | -4.7552 | -4.7015 | -4.6287 | -4.6610 |
| y = -10mm | | | |
| x [mm] | -30.0000 | -20.0000 | 20.0000 | 30.0000 |
| yz [mm] | -11.9218 | -11.8067 | -11.7550 | -11.8468 |

| Sph = +5.0 dpt, Add = 1.0 dpt | | | |
|---|---|---|---|
| y = -5mm | | | |
| x [mm] | -30.0000 | -20.0000 | 20.0000 | 30.0000 |
| yz [mm] | -5.5028 | -5.4121 | -5.3601 | -5.4312 |
| y = -10mm | | | |
| x [mm] | -30.0000 | -20.0000 | 20.0000 | 30.0000 |
| yz [mm] | -18.8206 | -13.7124 | -13.6144 | -13.7883 |

| Sph = +5.0 dpt, Add = 2.0 dpt | | | |
|---|---|---|---|
| y = -5mm | | | |
| x [mm] | -30.0000 | -20.0000 | 20.0000 | 30.0000 |
| yz [mm] | -5.7060 | -5.5826 | -5.5047 | -5.6056 |
| y = -10mm | | | |
| x [mm] | -30.0000 | -20.0000 | 20.0000 | 30.0000 |
| yz [mm] | -18.9496 | -14.1505 | -14.0444 | -14.2803 |

| Sph = +5.0 dpt, Add = 3.0 dpt | | | |
|---|---|---|---|
| Y = -5mm | | | |
| X [man] | -30.0000 | -20.0000 | 20.0000 | 30.0000 |
| Yz [mm] | -5.9781 | -5.8024 | -5.6754 | -5.8106 |

**42**

(fortgesetzt)

| Y = -10mm | | | | |
|---|---|---|---|---|
| X [mm] | -30.0000 | -20.0000 | 20.0000 | 30.0000 |
| Yz [mm] | -19.0922 | -14.6873 | -14.5602 | -14.8518 |

**14.** Brillenglas nach einem der Ansprüche 8 bis 13,
**dadurch gekennzeichnet, daß** für nicht aufgeführte Verordnungen inter- bzw. extrapolierte Werte gelten.

**Claims**

**1.** Method for the production of a spectacle lens, having

- a region which is designed for viewing at larger distances and in particular "to infinity", subsequently termed "distance part";
- a region which is designed for viewing at shorter distances and in particular "reading distances", subsequently termed "near part";
- a progression zone which is disposed between distance part and near part and in which the effect of the spectacle lens increases from the value in a distance reference point situated in the distance part to the value of a near reference point situated in the near part along a curve which veers towards the nose, subsequently termed "principal line";

with the steps:

- prescription of use values, in particular of a distance reference point and of a near reference point;
- prescription of a coordinate origin in the object-side vertex of the lens;
- production of the spectacle lens such that,

in order to minimise the dynamic distortion, the path curves (trajectories relative to the stationary point at (0.0)) which arise by connecting the intersection points of the image-side principal rays through the eye rotational point to a projection plane at a spacing r from the object-side vertex of the spectacle lens when imaging horizontally moving object points with the coordinates (x - dx, y, s) at the start of the movement and (x + dx, y, s) at the end of the movement through the progressive spectacle lens with r = 0 mm, s = - 40 mm and dx = 35 mm, fulfil the following properties:

the absolute amount of the difference of the minimum and of the maximum y coordinate of the trajectory is smaller than the value H which is indicated in the following table:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.1856 | 0.1233 | 0.0917 | 0.1602 |
| y = -10mm | | | | |
| x [mm] | -30.0000 | -20.0000 | 20.0000 | 30.0000 |
| H [mm] | 0.5294 | 0.3639 | 0.2681 | 0.4506 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |

(continued)

| Sph = -4.0 dpt, Add = 2.0 dpt | | | | |
|---|---|---|---|---|
| y = -5mm | | | | |
| H [mm] | 0.0578 | 0.0320 | 0.0032 | 0.0354 |
| y = -10mm | | | | |
| x [mm] | -30.0000 | -20.0000 | 20.0000 | 30.0000 |
| H [mm] | 0.3601 | 0.2496 | 0.1334 | 0.2765 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 0.0764 | 0.0648 | 0.0919 | 0.0754 |
| y = -10mm | | | | |
| x [mm] | -30.0000 | -20.0000 | 20.0000 | 30.0000 |
| H [mm] | 0.1425 | 0.1088 | 0.0297 | 0.0702 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.2399 | 0.1645 | 0.1494 | 0.2164 |
| y = -10mm | | | | |
| x [mm] | -30.0000 | -20.0000 | 20.0000 | 30.0000 |
| H [mm] | 0.4250 | 0.2887 | 0.2684 | 0.3859 |

| Sph = 0.5 dpt, Add = 2.0 dpt | | | | |
|---|---|---|---|---|
| y = - 5mm | | | | |
| x [mm] | -30.0000 | -20.0000 | 20.0000 | 30.0000 |
| H [mm] | 0.4535 | 0.3059 | 0.2945 | 0.4156 |
| y = -10mm | | | | |
| x [mm] | -30.0000 | -20.0000 | 20.0000 | 30.0000 |
| H [mm] | 0.7102 | 0.4717 | 0.4802 | 0.6734 |

| Sph = 0.5 dpt, Add. = 3.0 dpt | | | | |
|---|---|---|---|---|
| y = -5mm | | | | |
| x [mm] | -30.0000 | -20.0000 | 20.0000 | 30.0000 |
| H [mm] | 0.7038 | 0.4646 | 0.4508 | 0.6353 |

(continued)

| y = -10mm | | | | |
| --- | --- | --- | --- | --- |
| x [mm] | -30.0000 | -20.0000 | 20.0000 | 30.0000 |
| H [mm] | 1.0653 | 0.6846 | 0.7621 | 1.0458 |

| Sph = +5.0 dpt, Add = 1.0 dpt | | | | |
| --- | --- | --- | --- | --- |
| y = -5inm | | | | |
| x [mm] | -30.0000 | -20.0000 | 20.0000 | 30.0000 |
| H [mm] | 0.8607 | O.5828 | 0.4944 | 0.7478 |
| y= -10mm | | | | |
| x [mm] | -30.0000 | -20.0000 | 20-0000 | 30-0000 |
| H [mm] | 11.6223 | 1.2440 | 1.0375 | 1.5808 |

| Sph = +5.0 dpt, Add = 2.0 dpt | | | | |
| --- | --- | --- | --- | --- |
| y = -5mm | | | | |
| x [mm] | -30.0000 | -20.0000 | 20.0000 | 30.0000 |
| H [mm] | 1.1921 | 0.7903 | 0.7106 | 1.0740 |
| y = -10mm | | | | |
| x [mm] | -30.0000 | -20.0000 | 20.0000 | 30.0000 |
| H [mm] | 11.3204 | 1.5119 | 1.3512 | 2.0477 |

| Sph = +5.0 dpt, Add = 3.0 dpt | | | | |
| --- | --- | --- | --- | --- |
| y = -5mm | | | | |
| x [mm] | -30.0000 | -20.0000 | 20.0000 | 30.0000 |
| H [mm] | 1.6290 | 1.0524 | 0.9997 | 1.4771 |
| y = -10mm | | | | |
| x [mm] | -30.0000 | -20.0000 | 20.0000 | 30.0000 |
| H [mm] | 10.9637 | 1.8600 | 1.8110 | 2.6494 |

2. Method according to claim 1,
   **characterised in that** the arc length of the trajectory is shorter than the value L which is indicated in the following table:

| Sph = -4.0 dpt, Add = 1.0 dpt | | | | |
| --- | --- | --- | --- | --- |
| y = -5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |

(continued)

| Sph = -4.0 dpt, Add = 1.0 dpt | | | | |
| --- | --- | --- | --- | --- |
| y = -5mm | | | | |
| L [mm] | 1.8098 | 1.1431 | 1.1008 | 1.6803 |

| Sph = -4.0 dpt, Add = 2.0 dpt | | | | |
| --- | --- | --- | --- | --- |
| y= -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |

| Sph = -4.0 dpt, Add = 3.0 dpt | | | | |
| --- | --- | --- | --- | --- |
| y = -5mm | | | | |
| x [mm] | -30.0000 | -20.0000 | 20.0000 | 30.0000 |
| L [mm] | 1.7463 | 1.216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |

| Sph = 0.5 dpt, Add = 1.0 dpt | | | | |
| --- | --- | --- | --- | --- |
| y = -5mm | | | | |
| x [mm] | -30.0000 | -20.0000 | 20.0000 | 30.0000 |
| L [mm] | 0.6897 | 0.4330 | 0.3721 | 0.5844 |
| y = -10mm | | | | |
| x [mm] | -30.0000 | -20.0000 | 20.0000 | 30.0000 |
| L [mm] | 0.8672 | 0.6191 | 0.4724 | 0.6851 |

| Sph = 0.5 dpt, Add = 2.0 dpt | | | | |
| --- | --- | --- | --- | --- |
| y = -5mm | | | | |
| x [mm] -5 mm | -30.0000 | -20.0000 | 20.0000 | 30.0000 |
| L [mm] | 0.9082 | 0.5691 | 0.4604 | 0.7418 |
| y = - 10mm | | | | |
| x [mm] | -30.0000 | -20.0000 | 20.0000 | 30.0000 |
| L [mm] | 1.3123 | 0.9671 | 0.7530 | 0.9919 |

**EP 1 277 074 B1**

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.2493 | 0.8136 | 0.6038 | 0.9704 |
| y = -10mm | | | | |
| x [mm] | -30.0000 | -20.0000 | 20.0000 | 30.0000 |
| L [mm] | 1.9289 | 1.4589 | 1.1334 | 1.4221 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 3.7402 | 2.2660 | 2.0300 | 3.2926 |
| y = -10mm | | | | |
| x [mm] | -30.0000 | -20.0000 | 20.0000 | 30.0000 |
| L [mm] | 17.0238 | 2.8339 | 2.3619 | 3.7662 |

| Sph = +5.0 dpt, Add = 2.0 apt | | | | |
|---|---|---|---|---|
| y = -5mm | | | | |
| x [mm] | -30.0000 | -20.0000 | 20.0000 | 30.0000 |
| L [mm] | 4.1363 | 2.4717 | 2.1643 | 3.6054 |
| y = -10mm | | | | |
| x [mm] | -30.0000 | -20.0000 | 20.0000 | 30.0000 |
| L [mm] | 17.7989 | 3.2727 | 2.6076 | 4.2396 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 4.6985 | 2.8115 | 2.3838 | 3.9886 |
| y = - 10mm | | | | |
| x [mm] | -30.0000 | -20.0000 | 20.0000 | 30.0000 |
| L [mm] | 19.1536 | 3.9888 | 3.0181 | 4.7864 |

3. Method according to claim 1 or 2,
   **characterised in that** the average gradient of the trajectory is smaller than the value m which is indicated in the following table:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| m | 0.1504 | 0.2091 | -0.2338 | -0.1701 |
| y = -10mm | | | | |
| x [mm] | -30.0000 | -20.0000 | 20.0000 | 30.0000 |
| m | 0.3796 | 0.5037 | -0.4935 | -0.4012 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.0486 | 0.0601 | 0.0086 | -0.0375 |
| y = -10mm | | | | |
| x [mm] | -30.0000 | -20.0000 | 20.0000 | 30.0000 |
| m | 0.2906 | 0.4609 | -0.3178 | -0.2642 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| m | -0.0698 | -0.1448 | 0.2513 | 0.0771 |
| y = -10mm | | | | |
| x [mm] | -30.0000 | -20.0000 | 20.0000 | 30.0000 |
| m | 0.1408 | 0.3482 | 0.0943 | -0.0701 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| m | 0.4286 | 0.5223 | -0.8628 | -0.6280 |
| y = -10mm | | | | |
| x [mm] | -30.0000 | -20.0000 | 20.0000 | 30.0000 |
| m | 0.5658 | 0.5608 | -0.7568 | -0.7614 |

| Sph = 0.5 dpt, Add 2.0 dpt | | | | |
|---|---|---|---|---|
| y = -5mm | | | | |
| x [mm] | -30.0000 | -20.0000 | 20.0000 | 30.0000 |
| m | 0.6271 | 0.7017 | -1.2670 | -1.0635 |

(continued)

| y = -10mm | | | | |
|---|---|---|---|---|
| x [mm] | -30.0000 | -20.0000 | 20.0000 | 30.0000 |
| m | 0.6496 | 0.5786 | -0.8596 | -0.9913 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt. | | | | |
|---|---|---|---|---|
| y = -5mm | | | | |
| x [mm] | -30.0000 | -20.0000 | 20.0000 | 30.0000 |
| M | 0.2821 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.3463 | 0.4457 | -0.6708 | -0.4628 |
| y = -10mm | | | | |
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671z |

4. Method according to one of the claims 1 to 3,
   **characterised in that** the maximum gradient of the trajectory is smaller than the value M which is indicated in the following table:

| Sph = -4.0 dpt, Add = 1.0 dpt | | | | |
|---|---|---|---|---|
| y = - 10mm | | | | |
| x [mm] | -30.0000 | -20.0000 | 20.0000 | 30.0000 |
| M | 6.7715 | 0.7457 | -0.4274 | -0.5090 |

| Sph = -4.0 dpt, Add = 2.0 dpt | | | | |
|---|---|---|---|---|
| y = -10mm | | | | |
| x [mm] | -30.0000 | -20.0000 | 20.0000 | 30.0000 |
| M | 0.2870 | 0.4403 | 0.1951 | -0.3184 |

| Sph = -4.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.2179 | -0.0023 | 1.4361 | 13.7067 |

| Sph = 0.5 dpt, Add = 1.0 dpt | | | | |
|---|---|---|---|---|
| y = -10mm | | | | |
| x [mm] | -30.0000 | -20.0000 | 20.0000 | 30.0000 |
| M | 0.8577 | 0.7249 | -1.1962 | -11.5313 |

| Sph = 0.5 dpt, Add = 2.0 dpt | | | | |
|---|---|---|---|---|
| y = -10mm | | | | |
| x [mm] | -30.0000 | -20.0000 | 20.0000 | 30.0000 |
| M | 0.9196 | 0.9184 | -1.3399 | -2.8994 |

| Sph = 0.5 dpt, Add = 3.0 dpt | | | | |
|---|---|---|---|---|
| y = -10mm | | | | |
| x [mm] | -30.0000 | -20.0000 | 20.0000 | 30.0000 |
| M | 1.0969 | 1.0391 | -1.9120 | -4.9332 |

| Sph = +5.0 dpt, Add = 1.0 dpt | | | | |
|---|---|---|---|---|
| y = -10mm | | | | |
| x [mm] | -30.0000 | -20.0000 | 20.0000 | 30.0000 |

(continued)

| Sph = +5.0 dpt, Add = 1.0 dpt | | | | |
|---|---|---|---|---|
| y = -10mm | | | | |
| M | 1.9493 | 6.1058 | -1.9300 | -1.7983 |

| Sph = +5.0 dpt, Add = 2.0 dpt | | | | |
|---|---|---|---|---|
| y = -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -7.1729 | -7.8544 |

**5.** Method according to one of the claims 1 to 4,
**characterised in that** the x coordinate of the centre of the trajectory (half the sum of the minimum and of the maximum x coordinate) is smaller than the value xz according to the following table

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xz [mm] | -11.2191 | -7.5330 | 7.5648 | 11.2896 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -11.3556 | -7.6222 | 7.6442 | 11.4147 |
| y = -10mm | | | | |
| x [mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |

(continued)

| Sph = -4.0 dpt, Add = 3.0 dpt | | | | |
|---|---|---|---|---|
| y = -5mm | | | | |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -13.7030 | -9.1089 | 9.0833 | 13.6540 |
| y = -10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -13.7989 | -9.1581 | 9.1193 | 13.7287 |
| y = -10mm | | | | |
| x [mm] | -30.0000 | -20.0000 | 20.0000 | 30.0000 |
| xz [mm] | -13.9392 | -9.2439 | 9.1778 | 13.8389 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -14.0239 | -9.2904 | 9.2212 | 13.9123 |
| y = -10mm | | | | |
| x [mm] | -30.0000 | -20.0000 | 20.0000 | 30.0000 |
| xz [mm] | -14.2516 | -9.4367 | 9.3185 | 14.0854 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -17.3295 | -11.3902 | 11.2874 | 17.1168 |

(continued)

| y = -10mm | | | | |
|---|---|---|---|---|
| **x [mm]** | -30.0000 | -20.0000 | 20.0000 | 30.0000 |
| **xz [mm]** | -12.9054 | -11.5804 | 11.4231 | 17.3537 |

| Sph = +5.0 dpt, Add = 2.0 dpt | | | | |
|---|---|---|---|---|
| **y = - 5mm** | | | | |
| **x [mm]** | -30.0000 | -20.0000 | 20.0000 | 30.0000 |
| **xz [mm]** | -17.7640 | -11.6405 | 11.5155 | 17.5159 |
| **y = -10mm** | | | | |
| **x [mm]** | -30.0000 | -20.0000 | 20.0000 | 30.0000 |
| **xz [mm]** | -12.8237 | -11.8832 | 11.7004 | 17.8471 |

| Sph = +5.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **xz [mm]** | -18.2779 | -11.9499 | 11.7829 | 17.9519 |
| **y = -10mm** | | | | |
| **x [mm]** | -30.0000 | -20.0000 | 20.0000 | 30.0000 |
| xz [mm] | -12.7057 | -12.2789 | 12.0264 | 18.3631 |

**6.** Method according to one of the claims 1 to 5,
**characterised in that** the yx coordinate of the centre of the trajectory (half the sum of the minimum and of the maximum y coordinate) is smaller than the value yz according to the following table

| Sph = -4.0 dpt. Add = 1.0 dpt | | | | |
|---|---|---|---|---|
| **y = -5mm** | | | | |
| **x [mm]** | -30.0000 | -20.0000 | 20.0000 | 30.0000 |
| **yz [mm]** | -3.9197 | -3.9560 | -3.9576 | -3.9235 |
| **y = -10mm** | | | | |
| **x [mm]** | -30.0000 | -20.0000 | 20.0000 | 30.0000 |
| **yz [mm]** | -9.7598 | -9.8352 | -9.8493 | -9.7834 |

| Sph = -4.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **yz [mm]** | -3.9663 | -3.9993 | -3.9887 | -3.9561 |

(continued)

| y = -10mm | | | | |
|---|---|---|---|---|
| x [mm] | -30.0000 | -20.0000 | 20.0000 | 30.0000 |
| yz [mm] | -9.9049 | -9.9681 | -9.9741 | -9.9176 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.0196 | -4.0496 | -4.0167 | -3.9821 |
| y = -10mm | | | | |
| x [mm] | -30.0000 | -20.0000 | 20.0000 | 30.0000 |
| yz [mm] | -10.0654 | -10.1113 | -10.0993 | -10.0540 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -4.5384 | -4.5218 | -4.5064 | -4.5176 |
| y = -10mm | | | | |
| x [mm] | -30.0000 | -20.0000 | 20.0000 | 30.0000 |
| yz [mm] | -11.3786 | -11.3388 | -11.3147 | -11.3468 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -4.6100 | -4.5783 | -4.5450 | -4.5643 |
| y = -10mm | | | | |
| x [mm] | -30.0000 | -20.0000 | 20.0000 | 30.0000 |
| yz [mm] | -11.5798 | -11.5070 | -11.4737 | -11.5325 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.7552 | -4.7015 | -4.6287 | -4.6610 |
| y = -10mm | | | | |
| x [mm] | -30.0000 | -20.0000 | 20.0000 | 30.0000 |
| yz [mm] | -11.9218 | -11.8067 | -11.7550 | -11.8468 |

| Sph = +5.0 dpt, Add= 1.0 dpt | | | | |
|---|---|---|---|---|
| y = -5mm | | | | |
| x [mm] | -30.0000 | -20.0000 | 20.0000 | 30.0000 |
| yz [mm] | -5.5028 | -5.4121 | -5.3601 | -5.4312 |
| y = -10mm | | | | |
| x [mm] | -30.0000 | -20.0000 | 20.0000 | 30.0000 |
| yz [mm] | -18.8206 | -13.7124 | -13.6144 | -13.7883 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -5.7060 | -5.5826 | -5.5047 | -5.6056 |
| y = -10mm | | | | |
| x [mm] | -30.0000 | -20.0000 | 20.0000 | 30.0000 |
| yz [mm] | -18.9496 | -14.1505 | -14.0444 | -14.2803 |

| Sph = +5.0 dpt, Add = 3.0 dpt | | | | |
|---|---|---|---|---|
| Y = -5mm | | | | |
| X [mm] | -30.0000 | -20.0000 | 20.0000 | 30.0000 |
| Yz [mm] | -5.9781 | -5.8024 | -5.6754 | -5.8106 |
| Y = -10mm | | | | |
| X [mm] | -30.0000 | -20.0000 | 20.0000 | 30.0000 |
| Yz [mm] | -19.0922 | -14.6873 | -14.5602 | -14.8518 |

**7.** Method according to one of the claims 1 to 6,
**characterised in that**, for non-cited prescriptions, inter- or extrapolated values are valid.

**8.** Spectacle lens, having

- a region (distance part) which is designed for viewing at larger distances and in particular "to infinity",
- a region (near part) which is designed for viewing at shorter distances and in particular "reading distances", and
- a progression zone which is disposed between distance part and near part and in which the effect of the spectacle lens increases from the value in the distance reference point situated in the distance part to the value of the near reference point situated in the near part along a curve (principal line) which veers towards the nose, the spectacle lens being designed for standardised use values according to DIN 58208, part 2, and the coordinate origin is accepted to be in the object-side vertex of the spectacle lens,

**characterised in that**,
in order to minimise the dynamic distortion, the path curves (trajectories relative to the stationary point at (0.0)) which arise by connecting the intersection points of the image-side principal rays through the eye rotational point to a projection plane at a spacing r from the object-side vertex of the spectacle lens when imaging horizontally moving object points with the coordinates (x - dx, y, s) at the start of the movement and (x + dx, y, s) at the end of the movement through the progressive spectacle lens with r = 0 mm, s = - 40 mm and dx = 35 mm, fulfil the following properties:

the absolute value of the difference of the minimum and of the maximum y coordinate of the trajectory is smaller than the value H which is indicated in the following table:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.1856 | 0.1233 | 0.0917 | 0.1602 |
| y = -10mm | | | | |
| x [mm] | -30.0000 | -20.0000 | 20.0000 | 30.0000 |
| H [mm] | 0.5294 | 0.3639 | 0.2681 | 0.4506 |

| Sph = -4.0 dpt, Add = 2.0 dpt | | | | |
|---|---|---|---|---|
| y = - 5mm | | | | |
| x [mm] | -30.0000 | -20.0000 | 20.0000 | 30.0000 |
| H [mm] | 0.0578 | 0.0320 | 0.0032 | 0.0354 |
| y = -10mm | | | | |
| x [mm] | -30.0000 | -20.0000 | 20.0000 | 30.0000 |
| H [mm] | 0.3601 | 0.2496 | 0.1334 | 0.2765 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| H [m] | 0.0764 | 0.0648 | 0.0919 | 0.0754 |
| y = -10mm | | | | |
| x [mm] | -30.0000 | -20.0000 | 20.0000 | 30.0000 |
| H [mm] | 0.1425 | 0.1088 | 0.0297 | 0.0702 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.2399 | 0.1645 | 0.1494 | 0.2164 |
| y = -10mm | | | | |
| x [mm] | -30.0000 | -20.0000 | 20.0000 | 30.0000 |
| H [mm] | 0.4250 | 0.2887 | 0.2684 | 0.3859 |

| Sph = 0.5 dpt, Add = 2.0 dpt | | | | |
| --- | --- | --- | --- | --- |
| y = -5mm | | | | |
| x [mm] | -30.0000 | -20.0000 | 20.0000 | 30.0000 |
| H [mm] | 0.4535 | 0.3059 | 0.2945 | 0.4156 |
| y = -10mm | | | | |
| x [mm] | -30.0000 | -20.0000 | 20.0000 | 30.0000 |
| H [mm] | 0.7102 | 0.4717 | 0.4802 | 0.6734 |

| Sph = 0.5 dpt, Add = 3.0 dpt | | | | |
| --- | --- | --- | --- | --- |
| y = -5mm | | | | |
| x [mm] | -30.0000 | -20.0000 | 20.0000 | 30.0000 |
| H [mm] | 0.7038 | 0.4646 | 0.4508 | 0.6353 |
| y = -10mm | | | | |
| x [mm] | -30.0000 | -20.0000 | 20.0000 | 30.0000 |
| H [mm] | 1.0653 | 0.6846 | 0.7621 | 1.0458 |

| Sph = +5.0 dpt, Add = 1.0 dpt | | | | |
| --- | --- | --- | --- | --- |
| y = -5mm | | | | |
| x [mm] | -30.0000 | -20.0000 | 20.0000 | 30.0000 |
| H [mm] | 0.8607 | 0.5828 | 0.4944 | 0.7478 |
| y = -10mm | | | | |
| x [mm] | -30.0000 | -20.0000 | 20.0000 | 30.0000 |
| H [mm] | 11.6223 | 1.2440 | 1.0375 | 1.5808 |

| Sph = +5.0 dpt, Add = 2.0 dpt | | | | |
| --- | --- | --- | --- | --- |
| y = -5mm | | | | |
| x [mm] | -30.0000 | -20.0000 | 20.0000 | 30.0000 |
| H [mm] | 1.1921 | 0.7903 | 0.7106 | 1.0740 |
| y = -10mm | | | | |
| x [mm] | -30.0000 | -20.0000 | 20.0000 | 30.0000 |
| H [mm] | 11.3204 | 1.5119 | 1.3512 | 2.0477 |

| Sph = +5.0 dpt, Add = 3.0 dpt | | | | |
| --- | --- | --- | --- | --- |
| y = - 5mm | | | | |
| x [mm] | -30.0000 | -20.0000 | 20.0000 | 30.0000 |
| H [mm] | 1.6290 | 1.0524 | 0.9997 | 1.4771 |

(continued)

| y = -10mm | | | | |
|---|---|---|---|---|
| x [mm] | -30.0000 | -20.0000 | 20.0000 | 30.0000 |
| H [mm] | 10.9637 | 1.8600 | 1.8110 | 2.6494 |

**9.** Spectacle lens according to claim 8,
**characterised in that** the arc length of the trajectory is shorter than the value L which is indicated in the following table:

| Sph = -4.0 dpt, Add = 1.0 dpt | | | | |
|---|---|---|---|---|
| y = - 5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |
| L [mm] | 1.8098 | 1.1431 | 1.1008 | 1.6803 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.7463 | 1.1216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 0.6897 | 0.4330 | 0.3721 | 0.5844 |
| y = -10mm | | | | |
| x [mm] | -30.0000 | -20.0000 | 20.0000 | 30.0000 |

(continued)

| y = -10mm | | | | |
|---|---|---|---|---|
| L [mm] | 0.8672 | 0.6191 | 0.4724 | 0.6851 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 0.9082 | 0.5691 | 0.4604 | 0.7418 |
| y = -10mm | | | | |
| x [mm] | -30.0000 | -20.0000 | 20.0000 | 30.0000 |
| L [mm] | 1.3123 | 0.9671 | 0.7530 | 0.9919 |

| Sph = 0.5 dpt, Add = 3.0 dpt | | | | |
|---|---|---|---|---|
| y = - 5mm | | | | |
| x [mm] | -30.0000 | -20.0000 | 20.0000 | 30.0000 |
| L [mm] | 1.2493 | 0.8136 | 0.6038 | 0.9704 |
| y = -10mm | | | | |
| x [mm] | -30.0000 | -20.0000 | 20.0000 | 30.0000 |
| L [mm] | 1.9289 | 1.4589 | 1.1334 | 1.4221 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 3.7402 | 2.2660 | 2.0300 | 3.2926 |
| y = -10mm | | | | |
| x [mm] | -30.0000 | -20.0000 | 20.0000 | 30.0000 |
| L [mm] | 17.0238 | 2.8339 | 2.3619 | 3.7662 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 4.1363 | 2.4717 | 2.1643 | 3.6054 |
| y = -10mm | | | | |
| x [mm] | -30.0000 | -20.0000 | 20.0000 | 30.0000 |
| L [mm] | 17.7989 | 3.2727 | 2.6076 | 4.2396 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 4.6985 | 2.8115 | 2.3838 | 3.9886 |
| y = -10mm | | | | |
| x [mm] | -30.0000 | -20.0000 | 20.0000 | 30.0000 |
| L [mm] | 19.1536 | 3.9888 | 3.0181 | 4.7864 |

**10.** Spectacle lens according to claim 8 or 9,
**characterised in that** the average gradient of the trajectory is smaller than the value m which is indicated in the following table:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| m | 0.1504 | 0.2091 | -0.2338 | -0.1701 |
| y = -10mm | | | | |
| x [mm] | -30.0000 | -20.0000 | 20.0000 | 30.0000 |
| m | 0.3796 | 0.5037 | -0.4935 | -0.4012 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.0486 | 0.0601 | 0.0086 | -0.0375 |
| y = -10mm | | | | |
| x [mm] | -30.0000 | -20.0000 | 20.0000 | 30.0000 |
| m | 0.2906 | 0.4609 | -0.3178 | -0.2642 |

| Sph = -4.0 dpt, Add =. 3.0 dpt | | | | |
|---|---|---|---|---|
| y = - 5mm | | | | |
| x [mm] | -30.0000 | -20.0000 | 20.0000 | 30.0000 |
| m | -0.0698 | -0.1448 | 0.2513 | 0.0771 |
| y = -10mm | | | | |
| x [mm] | -30.0000 | -20.0000 | 20.0000 | 30.0000 |
| m | 0.1408 | 0.3482 | 0.0943 | -0.0701 |

| Sph =0.5 dpt, Add = 1.0 dpt | | | | |
|---|---|---|---|---|
| y = -5mm | | | | |
| x [mm] | -30.0000 | -20.0000 | 20.0000 | 30.0000 |
| m | 0.4286 | 0.5223 | -0.8628 | -0.6280 |
| y = -10mm | | | | |
| x [mm] | -30.0000 | -20.0000 | 20.0000 - | 30.0000 |
| m | 0.5658 | 0.5608 | -0.7568 | -0.7614 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| m | 0.6271 | 0.7017 | -1.2670 | -1.0635 |
| y = -10mm | | | | |
| x [mm] | -30.0000 | -20.0000 | 20.0000 | 30.0000 |
| m | 0.6496 | 0.5786 | -0.8596 | -0.9913 |

| Sph = 0.5 dpt, Add= 3.0 dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| M | 0.2821 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.3463 | 0.4457 | -0.6708 | -0.4628 |

(continued)

| y = -10mm | | | | |
|---|---|---|---|---|
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671 |

11. Spectacle lens according to one of the claims 8 to 10,
**characterised in that** the maximum gradient of the trajectory is smaller than the value M which is indicated in the following table:

| Sph = -4.0 dpt, Add = 1.0 dpt | | | | |
|---|---|---|---|---|
| y = -10mm | | | | |
| x [mm] | -30.0000 | -20.0000 | 20.0000 | 30.0000 |
| M | 6.7715 | 0.7457 | -0.4274 | -0.5090 |

| Sph = -4.0 dpt, Add = 2.0 dpt | | | | |
|---|---|---|---|---|
| y = -10mm | | | | |
| x [mm] | -30.0000 | -20.0000 | 20.0000 - | 30.0000 |
| M | 0.2870 | 0.4403 | 0.1951 | -0.3184 |

| Sph = -4.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.2179 | -0.0023 | 1.4361 | 13.7067 |

| Sph = 0.5 dpt, Add = 1.0 dpt | | | | |
|---|---|---|---|---|
| y = - 10mm | | | | |
| x [mm] | -30.0000 | -20. 0000 | 20.0000 | 30.0000 |
| M | 0.8577 | 0.7249 | -1.1962 | -11.5313 |

| Sph = 0.5 dpt, Add = 2.0 dpt | | | | |
|---|---|---|---|---|
| y = -10mm | | | | |
| x [mm] | -30.0000 | -20.0000 | 20.0000 | 30.0000 |
| M | 0.9196 | 0.9184 | -1.3399 | -2.8994 |

| Sph = 0.5 dpt, Add = 3.0 dpt | | | | |
|---|---|---|---|---|
| y = -10mm | | | | |
| x [mm] | -30.0000 | -20.0000 | 20.0000 | 30.0000 |
| M | 1.0969 | 1.0391 | -1.9120 | -4.9332 |

| Sph = +5.0 dpt, Add = 1.0 dpt | | | | |
|---|---|---|---|---|
| y = -10mm | | | | |
| x [mm] | -30.0000 | -20.0000 | 20.0000 | 30.0000 |
| M | 1.9493 | 6.1058 | -1.9300 | -1.7983 |

| Sph = +5.0 dpt, Add = 2.0 dpt | | | | |
|---|---|---|---|---|
| y= -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3. 0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -7.1729 | -7.8544 |

12. Spectacle lens according to one of the claims 8 to 11,
**characterised in that** the x coordinate of the centre of the trajectory (half the sum of the minimum and of the maximum x coordinate) is smaller than the value xz according to the following table

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xz [mm] | -11.2191 | -7.5330 | 7.5648 | 11.2896 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -11.3556 | -7.6222 | 7.6442 | 11.4147 |
| y = -10mm | | | | |
| x [mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -13.7030 | -9.1089 | 9.0833 | 13.6540 |
| y = - 10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -13.7989 | -9.1581 | 9.1193 | 13.72B7 |
| y = -10mm | | | | |
| x [mm] | -30. 0000 | -20.0000 | 20.0000 | 30.0000 |
| xz [mm] | -13.9392 | -9.2439 | 9.1778 | 13.8389 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -14.0239 | -9.2904 | 9.2212 | 13.9123 |

(continued)

| y = -10mm | | | | |
|---|---|---|---|---|
| x [mm] | -30.0000 | -20.0000 | 20.0000 | 30.0000 |
| xz [mm] | -14.2516 | -9.4367 | 9.3185 | 14.0854 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -17.3295 | -11.3902 | 11.2874 | 17.1168 |
| y = -10mm | | | | |
| x [mm] | -30.0000 | -20.0000 | 20.0000 | 30.0000 |
| xz [mm] | -12.9054 | -11.5804 | 11.4231 | 17.3537 |

| Sph = +5.0 dpt, Add = 2.0 dpt | | | | |
|---|---|---|---|---|
| y = - 5mm | | | | |
| x [mm] | -30.0000 | -20.0000 | 20.0000 | 30.0000 |
| xz [mm] | -17.7640 | -11.6405 | 11.5155 | 17.5159 |
| y = -10mm | | | | |
| x [mm] | -30.0000 | -20.0000 | 20.0000 | 30.0000 |
| xz [mm] | -12.8237 | -11.8832 | 11.7004 | 17.8471 |

| Sph = +5.0 dpt, Add = 3.0 dpt | | | | |
|---|---|---|---|---|
| y= -5mm | | | | |
| x [mm] | -30.0000 | -20.0000 | 20.0000 | 30.0000 |
| xz [mm] | -18.2779 | -11.9499 | 11.7829 | 17.9519 |
| y = -10mm | | | | |
| x [mm] | -30.0000 | -20.0000 | 20.0000 | 30.0000 |
| xz [mm] | -12.7057 | -12.2789 | 12.0264 | 18.3631 |

**13.** Spectacle lens according to one of the claims 8 to 12,
**characterised in that** the yx coordinate of the centre of the trajectory (half the sum of the minimum and of the maximum y coordinate) is smaller than the value yz according to the following table

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -3.9197 | -3.9560 | -3.9576 | -3.9235 |

(continued)

| y = -10mm | | | | |
|---|---|---|---|---|
| **x [mm]** | -30.0000 | -20.0000 | 20.0000 | 30.0000 |
| **yz [mm]** | -9.7598 | -9.8352 | -9.8493 | -9.7834 |

| Sph = -4.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **-yz [mm]** | -3.9663 | -3.9993 | -3.9887 | -3.9561 |
| **y = -10mm** | | | | |
| **x [mm]** | -30.0000 | -20.0000 | 20.0000 | 30.0000 |
| **yz [mm]** | -9.9049 | -9.9681 | -9.9741 | -9.9176 |

| Sph = -4.0 dpt, Add = 3.0 dpt | | | | |
|---|---|---|---|---|
| **y = -5mm** | | | | |
| **x [mm]** | -30.0000 | -20.0000 | 20.0000 | 30.0000 |
| **yz [mm]** | -4.0196 | -4.0496 | -4.0167 | -3.9821 |
| **y = -10mm** | | | | |
| **x [mm]** | -30.0000 | -20.0000 | 20.0000 | 30.0000 |
| **yz [mm]** | -10.0654 | -10.1113 | -10.0993 | -10.0540 |

| Sph = 0.5 dpt, Add = 1.0 dpt | | | | |
|---|---|---|---|---|
| **y = - 5mm** | | | | |
| **x [mm]** | -30.0000 | -20.0000 | 20.0000 | 30.0000 |
| **yz [mm]** | -4.5384 | -4.5218 | -4.5064 | -4.5176 |
| **y = -10mm** | | | | |
| **x [mm]** | -30.0000 | -20.0000 | 20.0000 | 30.0000 |
| **yz [mm]** | -11.3786 | -11.3388 | -11.3147 | -11.3468 |

| Sph= 0.5 dpt, Add = 2.0 dpt | | | | |
|---|---|---|---|---|
| **y = -5mm** | | | | |
| **x [mm]** | -30.0000 | -20.0000 | 20.0000 | 30.0000 |
| **yz [mm]** | -4.6100 | -4.5783 | -4.5450 | -4.5643 |
| **y = - 10mm** | | | | |
| **x [mm]** | -30.0000 | -20.0000 | 20.0000 | 30.0000 |
| **yz [mm]** | -11.5796 | -11.5070 | -11.4737 | -11.5325 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.7552 | -4.7015 | -4.6287 | -4.6610 |
| y = -10 mm | | | | |
| x [mm] | -30.0000 | -20.0000 | 20.0000 | 30.0000 |
| yz [mm] | -11.9218 | -11.8067 | -11.7550 | -11.8468 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -5.5028 | -5.4121 | -5.3601 | -5.4312 |
| y = -10mm | | | | |
| x [mm] | -30.0000 | -20.0000 | 20.0000 | 30.0000 |
| yz [mm] | -18.8206 | -13.7124 | -13.6144 | -13.7883 |

| sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -5.7060 | -5.5826 | -5.5047 | -5.6056 |
| y = -10mm | | | | |
| x [mm] | -30.0000 | -20.0000 | 20.0000 | 30.0000 |
| yz [mm] | -18.9496 | -14.1505 | -14.0444 | -14.2803 |

| Sph = +5.0 dpt, Add = 3.0 dpt | | | | |
|---|---|---|---|---|
| Y = -5mm | | | | |
| X [mm] | -30.0000 | -20.0000 | 20.0000 | 30.0000 |
| Yz [mm] | -5.9781 | -5.8024 | -5.6754 | -5.8106 |
| Y = -10mm | | | | |
| X [mm] | -30.0000 | -20.0000 | 20.0000 | 30.0000 |
| Yz [mm] | -19.0922 | -14.6873 | -14.5602 | -14.8518 |

**14.** Spectacle lens according to one of the claims 8 to 13,
**characterised in that**, for non-cited prescriptions, inter- or extrapolated values are valid.

**Revendications**

**1.** Procédé de fabrication d'un verre de lunettes avec

67

- une zone conçue pour la vision à des distances éloignées et en particulier « à l'infini », désignée ci-après « partie lointaine » ;
- une zone conçue pour la vision à courtes distances et en particulier « à des distances de lecture », désignée ci-après « partie proche » ;
- une zone de progression disposée entre la partie lointaine et la partie proche dans laquelle l'effet du verre de lunettes de la valeur d'un point de référence lointain situé dans la partie lointaine à la valeur d'un point de référence proche situé dans la partie proche le long d'une courbe sinueuse en direction du nez, désignée ci-après « ligne principale », augmente :

comprenant les étapes suivantes :

- spécification de valeurs de service, en particulier d'un point de référence lointain et d'un point de référence proche ;
- spécification d'un point d'origine des coordonnées dans le sommet côté objet du verre ;
- fabrication du verre de lunettes, de telle sorte que pour minimiser la distorsion d'image dynamique, les portions de trajectoire (trajectoires par rapport au point stationnaire sur (0,0)), qui sont créées par réunion des points d'intersection des faisceaux principaux côté image par la rotation de l'oeil avec un plan de projection à distance r du sommet côté objet du verre de lunettes lors de la représentation des points d'objet déplacés horizontalement avec les coordonnées (x-dx, y, s) au début du mouvement, et (x+dx, y, s) à la fin du mouvement à travers le verre de lunettes progressif avec r = 0 mm, s = -40 mm et dx = 35 mm, présentent les propriétés suivantes.

Le montant absolu de la différence entre les coordonnées y minimale et maximale de la trajectoire est inférieur à la valeur donnée H dans les tableaux suivants:

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.1856 | 0.1233 | 0.0917 | 0.1602 |
| y = - 10mm | | | | |
| x [mm] | -30.0000 | -20.0000 | 20.0000 | 30.0000 |
| H [mm] | 0.5294 | 0.3639 | 0.2681 | 0.4506 |

| Sph = -4.0 dpt, Add = 2.0 dpt | | | | |
|---|---|---|---|---|
| y= -5mm | | | | |
| x [mm] | -30.0000 | -20.0000 | 20.0000 | 30.0000 |
| H [mm] | 0.0578 | 0.0320 | 0.0032 | 0.0354 |
| y = -10mm | | | | |
| x [mm] | -30.0000 | -20.0000 | 20.0000 | 30.0000 |
| H [mm] | 0.3601 | 0.2496 | 0.1334 | 0.2965 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 0.0764 | 0.0648 | 0.0919 | 0.0754 |

(suite)

| y = -10mm | | | | |
|---|---|---|---|---|
| x [mm] | -30.0000 | -20.0000 | 20.0000 | 30.0000 |
| H [mm] | 0.1425 | 0.1088 | 0.0297 | 0.0702 |

| Sph = 0.5 dpt, Add =1.0 dpt | | | | |
|---|---|---|---|---|
| y = - 5mm 5mm | | | | |
| x [mm] | -30.0000 | -20.0000 | 20.0000 | 30.0000 |
| H [mm] | 0.2399 | 0.1645 | 0.1494 | 0.2164 |
| y = -10mm | | | | |
| x [mm] | -30.0000 | -20.0000 | 20.0000 | 30.0000 |
| H [mm] | 0.4250 | 0.2887 | 0.2684 | 0.3859 |

| Sph 0.5 dpt, Add = 2.0 dpt | | | | |
|---|---|---|---|---|
| y -5mm | | | | |
| x [mm] | -30.0000 | -20.0000 | 20.0000 | 30.0000 |
| H [mm] | 0.4535 | 0.3059 | 0.2945 | 0.4156 |
| y = -10mm | | | | |
| x [mm] | -30.0000 | -20.0000 | 20.0000 | 30.0000 |
| H [mm] | 0.7102 | 0.4717 | 0.4802 | 0.6734 |

| Sph = 0.5 dpt, Add = 3.0 dpt | | | | |
|---|---|---|---|---|
| y = -5mm | | | | |
| x [mm] | -30.0000 | 20.0000 | 20.0000 | 30.0000 |
| H [mm] | 0.7038 | 0.4646 | 0.4508 | 0.6353 |
| y = -10mm | | | | |
| x [mm] | -30.0000 | -20.0000 | 20.0000 | 30.0000 |
| H [mm] | 1.0653 | 0.6846 | 0.7621 | 1.0458 |

| Sph +5.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.8607 | 0.5828 | 0.4944 | 0.7478 |
| y = -10mm | | | | |
| x [mm] | -30.0000 | -20.0000 | 20.0000 | 30.0000 |
| H [mm] | 11.6223 | 1.2440 | 1.0375 | 1.5808 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| H [mm] | 1.1921 | 0.7903 | 0.7106 | 1.0740 |
| y= -10mm | | | | |
| x [mm] | -30.0000 | -20.0000 | 20.0000' | 30.0000 |
| H [mm] | 11.3204 | 1.5119 | 1.3512 | 2.0477 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 1.6290 | 1.0524 | 0.9997 | 1.4771 |
| y = -10mm | | | | |
| x [mm] | -30.0000 | -20 0000 | 20.0000 | 30.0000 |
| H [mm] | 10.9637 | 1.8600 | 1.8110 | 2.6494 |

2. Procédé selon la revendication 1,
   **caractérisé en ce que** la longueur d'arc de la trajectoire est plus courte que la valeur L mentionnée dans les tableaux suivants :

| Sph = -4.0 dpt. Add = 1.0 dpt | | | | |
|---|---|---|---|---|
| y = -5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |
| L [mm] | 1.8098 | 1.1431 | 1.1008 | 1.6803 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.7463 | 1.1216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |

| Sph = 0.5 dpt, Add = 1.0 dpt | | | | |
|---|---|---|---|---|
| y = -5mm m - 5mm | | | | |
| x [mm] | -30.0000 | -20-0000 | 20.0000 | 30.0000 |
| L [mm] | 0.6897 | 0.4330 | 0.3721 | 0.5844 |
| y = -10mm | | | | |
| x (mm) | -30.0000 | -20.0000 | 20.0000 | 30.0000 |
| L [mm] | 0.8672 | 0.6191 | 0.4724 | 0.6851 |

| Sph= 0.5 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 0.9082 | 0.5691 | 0.4604 | 0.7418 |
| y = -10mm | | | | |
| x [mm] | -30.0000 | -20.0000 | 20.0000 | 30.0000 |
| L [mm] | 1.3123 | 0.9671 | 0.7530 | 0.9919 |

| Sph = 0.5 dpt, Add = 3.0 dpt | | | | |
|---|---|---|---|---|
| y = - 5mm | | | | |
| x [mm] | -30.0000 | -20.0000 | 20.0000 | 30.0000 |
| L [mm] | 1.2493 | 0.8136 | 0.6038 | 0.9704 |
| y = -10mm | | | | |
| x [mm] | -30.0000 | -20.0000 | 20.0000 | 30.0000 |
| L [mm] | 1.9289 | 1.4589 | 1.1334 | 1.4221 |

| Sph= = +5.0 dpt Add =1.0 dpt | | | | |
|---|---|---|---|---|
| y= -5mm | | | | |
| x [mm] | -30.0000 | -20.0000 | 20.0000 | 30.0000 |
| L [mm] | 3.7402 | 2.2660 | 2.0300 | 3.2926 |

(suite)

| y = -10mm | | | | |
|---|---|---|---|---|
| **x [mm]** | -30.0000 | -20.0000 | 20.0000 | 30.0000 |
| **L [mm]** | 17.0238 | 2.8339 | 2.3619 | 3.7662 |

| Sph = +5.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **L [mm]** | 4.1363 | 2,4717 | 2.1643 | 3.6054 |
| **y = -10mm** | | | | |
| **x [mm]** | -30.0000 | -20.0000 | 20.0000 | 30.0000 |
| **L [mm]** | 17.7999 | 3.2727 | 2.6076 | 4.2396 |

| Sph = +5.0 dpt. Add-3.0dpt | | | | |
|---|---|---|---|---|
| **y = -5mm** | | | | |
| **x [mm]** | -30.0000 | -20.0000 | 20.0000 | 30,0000 |
| **L [mm]** | 4.6965 | 2.8115 | 2.3838 | 3.9886 |
| **y= -10mm** | | | | |
| **x [mm]** | -30.0000 | -20.0000 | 20.0000 | 30.0000 |
| **L [mm]** | 19.1536 | 3,9888 | 3.0181 | 4.7864 |

3. Procédé selon la revendication 1 ou 2,
   **caractérisé en ce que** la pente moyenne de la trajectoire est inférieure à la valeur m mentionnée dans les tableaux suivants :

| Sph = -4.0 dpt, Add = 1.0 dpt | | | | |
|---|---|---|---|---|
| **y = -5mm** | | | | |
| **x [mm]** | -30.0000 | -20.0000 | 20.0000 | 30.0000 |
| **m** | 0.1504 | 0.2091 | -0.2336 | -0.1701 |
| **y = -10mm** | | | | |
| **x [mm]** | -30.0000 | -20.0000 | 20.0000 | 30.0000 |
| **m** | 0.3796 | 0.5037 | -0.4935 | -0.4012 |

| Sph = -4.0 dpt, Add = 2.0 dpt | | | | |
|---|---|---|---|---|
| **y = -5mm** | | | | |
| **x [mm]** | -30.0000 | -20.0000 | 20.0000 | 30.0000 |
| **m** | 0.0486 | 0.0601 | 0.0086 | -0.0375 |

(suite)

| y = -10mm | | | | |
|---|---|---|---|---|
| x [mm] | -30.0000 | -20.0000 | 20.0000 | 30.0000 |
| m | 0.2906 | 0.4609 | -0.3178 | -0.2642 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| m | -0.0698 | -0.1448 | 0.2513 | 0.0771 |
| y = -10mm | | | | |
| x [mm] | -30.0000 | -20.0000 | 20.0000 | 30.0000 |
| m | 0.1408 | 0.3482 | 0.0943 | -0.0701 |

| Sph = 0.5 dpt, Add = 1.0 dpt | | | | |
|---|---|---|---|---|
| y = -5mm | | | | |
| X [mm] | -30.0000 | -20.0000 | 20.0000 | 30.0000 |
| m | 0.4286 | 0.5223 | -0.8628 | -0.6280 |
| y m -10mm | | | | |
| x (mm) | -30.0000 | -20.0000 | 20.0000 | 30.0000 |
| m | 0.5658 | 0.5608 | -0.7568 | -0.7614 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| m | 0.6271 | 0.7017 | -1.2670 | -1.0635 |
| y = -10mm | | | | |
| x [mm] | -30.0000 | -20.0000 | 20.0000 | 30.0000 |
| m | 0.6496 | 0.5786 | -0.8596 | -0.9913 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| M | 0.2821 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| m | 0.3463 | 0.4457 | -0.6708 | -0.4628 |
| y = -10mm | | | | |
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671 |

**4.** Procédé selon l'une quelconque des revendications 1 à 3, **caractérisé en ce que** la pente maximale de la trajectoire est inférieure à la valeur M mentionnée dans les tableaux suivants :

| Sph = -4.0 dpt, Add = 1.0 dpt | | | | |
|---|---|---|---|---|
| y = -10mm | | | | |
| x [mm] | -30.0000 | -20.0000 | 20.0000 | 30.0000 |
| M | 6.7715 | 0.7457 | -0.4274 | -0.5090 |

| Sph = -4.0 dpt, Add = 2.0 dpt | | | | |
|---|---|---|---|---|
| y = -10mm | | | | |
| x [mm] | -30.0000 | -20.0000 | 20.0000 | 30.0000 |
| M | 0.2870 | 0.4403 | 0.1951 | -0.3184 |

| Sph = -4.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.2179 | -0.0023 | 1.4361 | 13.7067 |

| Sph = 0.5 dpt, Add =1.0 dpt | | | | |
|---|---|---|---|---|
| y = -10mm | | | | |
| x [mm] | -30.0000 | -20.0000 | 20.0000 | 30.0000 |
| M | 0.8577 | 0.7249 | -1.1962 | -11.S313 |

| Sph = 0.5 dpt, Add = 2.0 dpt | | | | |
|---|---|---|---|---|
| y = -10mm | | | | |
| x [mm] | -30,0000 | -20.0000 | 20.0000 | 30.0000 |
| M | 0.9196 | 0.9184 | -1.3399 | -2.8994 |

| Sph = 0.5 dpt, Add = 3.0 dpt | | | | |
|---|---|---|---|---|
| y = -10mm | | | | |
| x (mm) | -30.0000 | -20.0000 | 20.0000 | 30.0000 |
| M | 1.0969 | 1.0391 | -1.9120 | -4.9332 |

| Sph = +5.0 dpt, Add = 1.0 dpt | | | | |
|---|---|---|---|---|
| y = -10mm | | | | |
| x (mm) | -30.0000 | -20.0000 | 20.0000 | 30.0000 |
| M | 1.9493 | 6.1058 | -1.9300 | -1.7983 |

| Sph = +5.0 dpt, Add = 2.0 dpt | | | | |
|---|---|---|---|---|
| y = -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -1.1729 | -7.8544 |

5. Procédé selon l'une quelconque des revendications 1 à 4,
   **caractérisé en ce que** la coordonnée x du centre de la trajectoire (demi-somme des coordonnées x minimale et maximale) est inférieure à la valeur xz selon les tableaux suivants :

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xz [mm] | -11.2191 | -7.5330 | 7.5648 | 11.2896 |

| Sph = -4.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -11.3556 | -7.6222 | 7.6442 | 11.4147 |
| y = -10mm | | | | |
| x [mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
|---|---|---|---|---|
| y = -5 mm | | | | |
| x [mm] | -30.0000 | -20.0000 | 20.0000 | 30.0000 |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -13.7030 | -9.1089 | 9,0833 | 13.6540 |
| y = -10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add. = 2.0 dpt | | | | |
| --- | --- | --- | --- | --- |
| y = -5mm | | | | |
| x [mm] | -30.0000 | -20.0000 | 20.0000 | 30.0000 |
| xz [mm] | -13.7989 | -9.1581 | 9.1193 | 13.7287 ' |
| y = -10mm | | | | |
| x [mm] | -30.0000 | -20.0000 | 20.0000 | 30.0000 |
| xz [mm] | -13.9392 | -9.2439 | 9.1778 | 13.8389 |

| Sph = 0.5 dpt, Add = 3.0 dpt | | | | |
| --- | --- | --- | --- | --- |
| y = - 5mm | | | | |
| x [mm] | -30.0000 | -20.0000 | 20.0000 | 30.0000 |
| xz [mm] | -14.0239 | -9.2904 | 9.2212 | 13.9123 |
| y = - 10mm | | | | |
| x [mm] | -30.0000 | -20.0000 | 20.0000 | 30.0000 |
| xz [mm] | -14.2516 | -9.4367 | 9.3185 | 14.0854 |

| Sph = +5.0 dpt, Add = 1.0 dpt | | | | |
| --- | --- | --- | --- | --- |
| y = -5mm | | | | |
| x [mm] | -30.0000 | -20.0000 | 20.0000 | 30.0000 |
| xz [mm] | -17.3295 | -11.3902 | 11.2874 | 17.1168 |
| y = -10mm | | | | |
| x [mm] | -30.0000 | -20.0000 | 20.0000 | 30.0000 |
| xz [mm] | -12.9054 | -11.5804 | 11.4231 | 17.3537 |

| Sph = +5.0 dpt, Add = 2.0 dpt | | | | |
| --- | --- | --- | --- | --- |
| y = -5mm | | | | |
| x [mm] | -30.0000 | -20.0000 | 20.0000 | 30.0000 |
| xz [mm] | -17.7640 | -11.6405 | 11.5155 | 17.5159 |
| y = -10mm | | | | |
| x [mm] | -30.0000 | -20.0000 | 20.0000 | 30.0000 |
| xz [mm] | -12.8237 | -11.8832 | 11.7004 | 17.8471 |

| Sph +5.0 dpt. Add 3.0 dpt | | | | |
| --- | --- | --- | --- | --- |
| y = -5mm | | | | |
| x [mm] | -30.0000 | -20.0000 | 20.0000 | 30.0000 |
| xz [mm] | -18.2779 | -11.9499 | 11.7829 | 17.9519 |

(suite)

| y = -10mm | | | | |
|---|---|---|---|---|
| **x [mm]** | -30.0000 | -20,0000 | 20.0000 | 30.0000 |
| **xz [mm]** | -12,7057 | | -12.2789 | 12.0264 | 18.3631 |

**6.** Procédé selon l'une quelconque des revendications 1 à 5,
**caractérisé en ce que** la coordonnée yx du centre de la trajectoire (demi-somme des coordonnées y minimale et maximale) est inférieure à la valeur yz selon les tableaux suivants:

| Sph = -4.0 dpt, Add =1.0 dpt | | | | |
|---|---|---|---|---|
| y = -5mm | | | | |
| **x [mm]** | -30.0000 | -20.0000 | 20.0000 | 30.0000 |
| **yz [mm]** | -3.9197 | -3.9560 | -3.9576 | -3.9235 |
| y = -10mm | | | | |
| **x [mm]** | -30.0000 | -20.0000 | 20.0000 | 30.0000 |
| **yz [mm]** | -9.7598 | -9.8352 | -9.8493 | -9.7834 |

| Sph = -4.0 dpt, Add = 2.0 dpt y = - 5mm | | | | |
|---|---|---|---|---|
| **x (mm)** | -30.0000 | -20.0000 | 20.0000 | 30.0000 |
| **yz [mm]** | -3.9663 | -3.9993 | -3.9887 | -3.9561 |
| y = -10mm | | | | |
| **x [mm]** | -30.0000 | -20.0000 | 20.0000 | 30,0000 |
| **yz [mm]** | -9.9049 | -9.9681 | -9.9741 | -9.9176 |

| Sph = -4.0 dpt. Add = 3.0 dpt | | | | |
|---|---|---|---|---|
| y = -5mm | | | | |
| **x [mm]** | -30.0000 | -20.0000 | 20.0000 | 30.0000 |
| **yz [mm]** | -4.0196 | -4.0496 | -4.0167 | -3.9821 |
| y = -10mm | | | | |
| **x [mm]** | -30.0000 | -20.0000 | 20.0000 | 30.0000 |
| **yz [mm]** | -10.0654 | -10,1113 | -10.0993 | -10.0540 |

| Sph = 0.5 dpt. Add = 1.0 dpt | | | | |
|---|---|---|---|---|
| y = -5mm | | | | |
| **x [mm]** | -30.0000 | -20.0000 | 20.0000 | 30.0000 |
| **yz [mm]** | -4.5384 | -4.5218 | -4.5064 | -4.5176 |

(suite)

| y = -10mm | | | | |
|---|---|---|---|---|
| x [mm] | -30.0000 | -20.0000 | 20.0000 | 30.0000 |
| yz [mm] | -11.3786 | -11.3388 | -11.3147 | -11.3469 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -4.6100 | -4.5783 | -4.5450 | -4.5643 |
| y = -10mm | | | | |
| x [mm] | -30.0000 | -20.0000 | 20.0000 | 30.0000 |
| yz [mm] | -11.5798 | -11.5070 | -11.4737 | -11.5325 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| yz [mm] | -4.7552 | -4.7015 | -4.6287 | -4,6610 |
| y = -10mm | | | | |
| x [mm] | -30.0000 | -20.0000 | 20.0000 | 30.0000 |
| yx [mm] | -11.9218 | -11.8067 | -11.7550 | -11.8468 |

| Sph = +5.0 dpt, Add = 1.0 dpt | | | | |
|---|---|---|---|---|
| y =-5mm | | | | |
| x [mm] | -30.0000 | -20.0000 | 20.0000 | 30.0000 |
| yz [mm] | -5.5028 | -5.4121 | -5.3601 | -5.4312 |
| y = -10mm | | | | |
| x [mm] | -30.0000 | -20.0000 | 20.0000 | 30.0000 |
| yz [mm] | -18.8206 | -13.7124 | -13.6144 | -13.7883 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| yz [mm] | -5.7060 | -5.5826 | -5.5047 | -5.6056 |
| y = -10mm | | | | |
| x [mm] | -30.0000 | -20.0000 | 20.0000 | 30.0000 |
| yz [mm] | -18.9496 | -14.1505 | -14.0444 | -14.2803 |

| Sph +5.0 dpt, Add = 3.0 dpt | | | | |
|---|---|---|---|---|
| Y = -5mm | | | | |
| X [mm] | -30.0000 | -20.0000 | 20.0000 | 30.0000 |
| Yz [mm] | -5.9781 | -5.8024 | -5.6754 | -5.8106 |
| Y = -10mm | | | | |
| X [mm] | -30.0000 | -20.0000 | 20.0000 | 30.0000 |
| Yz [mm] | -19.0922 | -14.6873 | -14.5602 | -14.8518 |

**7.** Procédé selon l'une quelconque des revendications 1 à 6,
**caractérisé en ce que** des valeurs interpolées et/ou extrapolées s'appliquent à des règlements non mentionnés.

**8.** Verre de lunettes avec

- une zone conçue pour la vision à des distances éloignées et en particulier « à l'infini », (partie lointaine) ;
- une zone conçue pour la vision à courtes distances et en particulier « à des distances de lecture », (partie proche) ; et
- une zone de progression disposée entre la partie lointaine et la partie proche dans laquelle l'effet du verre de lunettes de la valeur du point de référence lointain situé dans la partie lointaine à la valeur du point de référence proche situé dans la partie proche le long d'une courbe sinueuse en direction du nez, (ligne principale), augmente, le verre de lunettes étant conçu pour des valeurs de service standardisées selon DIN 58 208, partie 2, et le point d'origine des coordonnées étant supposé dans le sommet côté objet du verre de lunettes,

**caractérisé en ce que** pour minimiser la distorsion d'image dynamique, les portions de trajectoire (trajectoires par rapport au point stationnaire sur (0,0)), qui sont créées par réunion des points d'intersection des faisceaux principaux côté image par la rotation de l'oeil avec un plan de projection à distance r du sommet côté objet du verre de lunettes lors de la représentation des points d'objet déplacés horizontalement avec les coordonnées (x-dx, y, s) au début du mouvement, et (x+dx, y, s) à la fin du mouvement à travers le verre de lunettes progressif avec r = 0 mm, s = -40 mm et dx = 35 mm, présentent les propriétés suivantes.
Le montant absolu de la différence entre les coordonnées y minimale et maximale de la trajectoire est inférieur à la valeur donnée H dans les tableaux suivants :

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.1856 | 0.1233 | 0.0917 | 0.1602 |
| y = - 10mm | | | | |
| x [mm] | -30.0000 | -20.0000 | 20.0000 | 30.0000 |
| H [mm] | 0.5294 | 0.3639 | 0.2681 | 0.4506 |

| Sph = -4.0 dpt, Add =2.0 dpt | | | | |
|---|---|---|---|---|
| y = -5mm | | | | |
| x [mm] | -30.0000 | -20.0000 | 20.0000 | 30.0000 |
| H [mm] | 0.0578 | 0.0320 | 0.0032 | 0.0354 |

(suite)

| y = -10mm | | | | |
|---|---|---|---|---|
| x [mm] | -30.0000 | -20.0000 | 20.0000 | 30.0000 |
| H [mm] | 0.3601 | 0.2496 | 0.1334 | 0.2765 |

| Sph = -4.0 dpt, Add = 3.0 dpt | | | | |
|---|---|---|---|---|
| y = -5mm | | | | |
| x [mm] | -30.0000 | -20,0000 | 20.0000 | 30.0000 |
| H [mm] | 0.0764 | 0.0646 | 0.0919 | 0.0754 |
| y = -10 mm | | | | |
| x [mm] | -30.0000 | -20.0000 | 20.0000 | 30.0000 |
| H [mm] | 0.1425 | 0.1088 | 0.0297 | 0.0702 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| H [mm] | 0.2399 | 0.1645 | 0.1494 | 0.2164 |
| y = -10mm | | | | |
| x [mm] | -30.0000 | -20.0000 | 20.0000 | 30.0000 |
| H [mm] | 0.4250 | 0.2887 | 0.2664 | 0.3859 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| K [mm] | 0.4535 | 0.3059 | 0.2945 | 0.4156 |
| y =-10mm | | | | |
| x [mm] | -30.0000 | -20.0000 | 20.0000 | 30.0000 |
| H [mm] | 0.7102 | 0.4717 | 0.4802 | 0.6734 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 0.7038 | 0.4646 | 0.4508 | 0.6353 |
| y = - 10mm | | | | |
| x [mm] | -30.0000 | -20.0000 | 20.0000 | 30.0000 |
| H [mm] | 1.0653 | 0.6846 | 0.7621 | 1.0456 |

| Sph = +5.0 dpt, Add = 1.0 dpt | | | | |
|---|---|---|---|---|
| y = -5mm | | | | |
| x [mm] | -30.0000 | 20.0000 | 20.0000 | 30.0000 |
| H [mm] | 0.8607 | 0.5828 | 0.4944 | 0.7478 |
| y = -10mm | | | | |
| x [mm] | -30.0000 | -20.0000 | 20.0000 | 30.0000 |
| H [mm] | 11.6223 | 1.2440 | 1.0375 | 1.5808 |

| Sph= +5.0 dpt, Add = 2.0 dpt | | | | |
|---|---|---|---|---|
| y =-5mm | | | | |
| x [mm] | -30.0000 | -20.0000 | 20.0000 | 30.0000 |
| H [mm] | 1.1921 | 0.7903 | 0.7106 | 1.0740 |
| y = -10mm | | | | |
| x [mm] | -30.0000 | -20.0000 | 20.0000 | 30.0000 |
| H [mm] | 11.3204 | 1.5119 | 1.3512 | 2.0477 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| H [mm] | 1.6290 | 1.0524 | 0.9997 | 1.4771 |
| y = -10mm | | | | |
| x [mm] | -30.0000 | -20.0000 | 20.0000 | 30.0000 |
| H [mm] | 10.9637 | 1.8600 | 1.8110 | 2.6494 |

**9.** Verre de lunettes selon la revendication 8,
**caractérisé en ce que** la longueur d'arc de la trajectoire est plus courte que la valeur L mentionnée dans les tableaux suivants :

| Sph = -4.0 dpt, Add =1.0 dpt | | | | |
|---|---|---|---|---|
| y = -5mm | | | | |
| x [mm] | -30.0000 | -20.0000 | 20.0000 | 30.0000 |
| L [mm] | 1.5909 | 0.9767 | 0.9266 | 1.4663 |
| y = -10mm | | | | |
| x [mm] | -30.0000 | -20.0000 | 20.0000 | 30.0000 |
| L [mm] | 1.8098 | 1.1431 | 1.1008 | 1.6803 |

| Sph = -4,0 dpt, Add =2.0 dpt | | | | |
|---|---|---|---|---|
| y = -5mm | | | | |
| x [mm] | -30.0000 | -20.0000 | 20.0000 | 30.0000 |
| L [mm] | 1.6783 | 1.0503 | 1.0222 | 1.5680 |
| y = -10mm | | | | |
| x [mm] | -30.0000 | -20.0000 | 20.0000 | 30.0000 |
| L [mm] | 1.8182 | 1.1592 | 1.1855 | 1.7506 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.7463 | 1.1216 | 1.1184 | 1.6751 |
| y = -10mm | | | | |
| x [mm] | -30.0000 | -20.0000 | 20.0000 | 30.0000 |
| L [mm] | 1.8358 | 1.2066 | 1.3027 | 1.8575 |

| Sph = 0.5 dpt, Add = 1.0 dpt | | | | |
|---|---|---|---|---|
| y = -5 mm | | | | |
| x [mm] | -30.0000 | -20.0000 | 20.0000 | 30.0000 |
| L [mm] | 0.6897 | 0.4330 | 0.3721 | 0.5844 |
| y = - 10 mm | | | | |
| x [nm] | -30.0000 | -20.0000 | 20.0000 | 30.0000 |
| L [mm] | 0.8672 | 0.6191 | 0.4724 | 0.6851 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| L [mm] | 0.9082 | 0.5691 | 0.4604 | 0.7418 |
| y = -10mm | | | | |
| x [mm] | -30.0000 | -20.0000 | 20.0000 | 30.0000 |
| L [mm] | 1.3123 | 0.9671 | 0.7530 | 0.9919 |

| Sph = 0.5 dpt, Add = 3.0 dpt | | | | |
|---|---|---|---|---|
| y = -5mm | | | | |
| x [mm] | -30.0000 | -20.0000 | 20.0000 | 30.0000 |
| L [mm] | 1.2493 | 0.8136 | 0.603B | 0.9704 |

(suite)

| y = -10mm | | | | |
|---|---|---|---|---|
| x [mm] | -30.0000 | -20.0000 | 20.0000 | 30.0000 |
| L [mm] | 1.9289 | 1.4589 | 1.1334 | 1.4221 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| L [mm] | 3.7402 | 2.2660 | 2.0300 | 3.2926 |
| y = -10mm | | | | |
| x [mm] | -30.0000 | -20.0000 | 20.0000 | 30.0000 |
| L [mm] | 17.0238 | 2.8339 | 2.3619 | 3.7662 |

| Sph = +5.0 dpt, Add = 2.0 dpt | | | | |
|---|---|---|---|---|
| y = -5mm | | | | |
| x [mm] | -30.0000 | -20.6000 | 20.0000 | 30.0000 |
| L [mm] | 4.1363 | 2.4717 | 2.1643 | 3.6054 |
| y = -10mm | | | | |
| x [mm] | -30.0000 | -20.0000 | 20.0000 | 30.0000 |
| L [mm] | 17.7989 | 3.2727 | 2.6076 | 4.2396 |

| Sph =+5.0 dpt. Add =3.0dpt | | | | |
|---|---|---|---|---|
| y = -5mm | | | | |
| x [mm] | -30.0000 | -20.0000 | 20.0000 | 30.0000 |
| L [mm] | 4.6985 | 2.8115 | 2.3838 | 3.9886 |
| y =-10mm | | | | |
| x [mm] | -30.0000 | -20.0000 | 20.0000 | 30.0000 |
| L [mm] | 19.1536 | 3.9888 | 3.0181 | 4.7864 |

**10.** Verre de lunettes selon la revendication 8 ou 9,
**caractérisé en ce que** la pente moyenne de la trajectoire est inférieure à la valeur m mentionnée dans les tableaux suivants :

| Sph = -4.0 dpt. Add = 1.0 dpt | | | | |
|---|---|---|---|---|
| y = -5mm | | | | |
| x [mm] | -30.0000 | -20.0000 | 20.0000 | 30.0000 |
| m | 0.1504 | 0.2091 | -0.2338 | 0.1701 |

(suite)

| y = -10mm | | | | |
|---|---|---|---|---|
| x [mm] | -30.0000 | -20.0000 | 20.0000 | 30.0000 |
| m | 0.3796 | 0.5037 | -0.4935 | -0.4012 |

| Sph = -4.0 dpt. Add = 2.0 dpt | | | | |
|---|---|---|---|---|
| y = -5mm | | | | |
| x [mn] | -30.0000 | -20.0000 | 20.0000 | 30.0000 |
| m | 0.0486 | 0.0601 | 0.0086 | -0.0375 |
| y = -10mm | | | | |
| x [mm] | -30.0000 | -20.0000 | 20.0000 | 30.0000 |
| m | 0.2906 | 0.4609 | -0.3178 | -0.2642 |

| Sph = -4.0 dpt, Add = 3.0 dpt | | | | |
|---|---|---|---|---|
| y = - 5mm | | | | |
| x [mm] | -30.0000 | -20.0000 | 20.0000 | 30.0000 |
| m | -0.0698 | -0.1448 | 0.2513 | 0.0771 |
| y = -10mm | | | | |
| x [mm] | -30.0000 | -20.0000 | 20.0000 | 30.0000 |
| m | 0.1408 | 0.3482 | 0.0943 | -0.0701 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| m | 0.4266 | 0.5223 | -0.8628 | -0.6280 |
| y = -10mm | | | | |
| x [mm] | -30.0000 | -20.0000 | 20.0000 | 30.0000 |
| m | 0.5658 | 0.5608 | -0.7568 | -0.7614 |

| Sph = 0.5 dpt, Add = 2.0 dpt | | | | |
|---|---|---|---|---|
| x = -5mm | | | | |
| x [mm] | -30.0000 | -20.0000 | 20.0000 | 30.0000 |
| m | 0.6271 | 0.7017 | -1.2670 | -1.0635 |
| y = -10mm | | | | |
| x [mm] | -30.0000 | -20.0000 | 20.0000 | 30.0000 |
| m | 0.6496 | 0.5786 | -0.8596 | -0.9913 |

| Sph = 0.5 dpt, Add = 3.0dpt | | | | |
|---|---|---|---|---|
| y = -5mm | | | | |
| x [mm] | -30.0000 | -20.0000 | 20.0000 | 30.0000 |
| m | 0.7248 | 0.7639 | -1.5740 | -1.4026 |
| y = -10mm | | | | |
| x [mm] | -30.0000 | -20.0000 | 20.0000 | 30.0000 |
| m | 0.6752 | 0.5619 | -0.9717 | -1.1853 |

| Sph = +5.0 dpt, Add = 1.0 dpt | | | | |
|---|---|---|---|---|
| y = -5m | | | | |
| x [mm] | -30.0000 | -20.0000 | 20.0000 | 30.0000 |
| M | 0.2921 | 0.3767 | -0.5349 | -0.3554 |
| y = -10mm | | | | |
| x [mm] | -30.0000 | -20.0000 | 20.0000 | 30.0000 |
| M | -2.0435 | 0.5602 | -0.6714 | -0.5836 |

| Sph = +5.0 dpt, Add = 2.0 dpt | | | | |
|---|---|---|---|---|
| y = -5mm | | | | |
| x [mm] | -30.0000 | 20.0000 | 20.0000 | 30.0000 |
| m | 0.3463 | 0.4457 | -0.6708 | -0.4628 |
| y = -10mm | | | | |
| x [mm] | -30.0000 | -20.0000 | 20.0000 | 30.0000 |
| m | -1.8039 | 0.5635 | -0.7148 | -0.6528 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| m | 0.4117 | 0.5009 | -0.8530 | -0.5979 |
| y = -10mm | | | | |
| x [mm] | -30.0000 | -20.0000 | 20.0000 | 30.0000 |
| m | -1.5811 | 0.5560 | -0.8075 | -0.7671 |

11. Verre de lunettes selon l'une quelconque des revendications 8 à 10,
**caractérisé en ce que** la pente maximale de la trajectoire est inférieure à la valeur M mentionnée dans les tableaux suivants :

| Sph = -4.0 dpt, Add = 1.0 dpt | | | | |
|---|---|---|---|---|
| y = -10mm | | | | |
| x [mm] | -30.0000 | -20.0000 | 20.0000 | 30.0000 |
| M | 6.7715 | 0.7457 | -0.4274 | -0.5090 |

| Sph = -4.0 dpt, Add = 2.0 dpt | | | | |
|---|---|---|---|---|
| y = -10mm | | | | |
| x [mm] | -30.0000 | -20.0000 | 20.0000 | 30.0000 |
| N | 0.2870 | 0.4403 | 0.1951 | -0.3184 |

| Sph = -4.0 dpt, Add = 3.0 dpt | | | | |
|---|---|---|---|---|
| y = - 10mm | | | | |
| x [mm] | -30.0000 | -20.0000 | 20.0000 | 30.0000 |
| M | 0.2179 | -0.0023 | 1.4361 | 13.7067 |

| Sph =0.5 dpt, Add =1.0 dpb | | | | |
|---|---|---|---|---|
| y = -10mm | | | | |
| x [mm] | -30.0000 | -20.0000 | 20.0000 | 30.0000 |
| M | 0.8577 | 0.7249 | -1.1962 | -11.5313 |

| Sph = 0.5 dpt, Add = 2.0 dpt | | | | |
|---|---|---|---|---|
| y = -10mm | | | | |
| x [mm] | -30.0000 | -20.0000 | 20.0000 | 30.0000 |
| M | 0.9196 | 0.9184 | -1.3399 | -2.8994 |

| Sph = 0.5 dpt, Add =3.0 dpt | | | | |
|---|---|---|---|---|
| y = - 10mm | | | | |
| x [mm] | -30.0000 | -20.0000 | 20.0000 | 30.0000 |
| M | 1.0969 | 1.0391 | -1.9120 | -4.9332 |

| Sph = +5.0 dpt, Add 1.0 dpt | | | | |
|---|---|---|---|---|
| y = -10mm | | | | |
| x [mm] | -30.0000 | -20.0000 | 20.0000 | 30.0000 |
| M | 1.9493 | 6.1058 | -1.9300 | -1.7983 |

| Sph = +5.0 dpt, Add = 2.0 dpt | | | | |
|---|---|---|---|---|
| y = -10mm | | | | |
| x [mm] | -30.0000 | -20.0000 | 20.0000 | 30.0000 |
| M | 2.8737 | 0.8570 | -2.1444 | -9.0899 |

| Sph = +5.0 dpt, Add = 3.0 dpt | | | | |
|---|---|---|---|---|
| y = -10mm | | | | |
| x [mm] | -30.0000 | -20.0000 | 20.0000 | 30.0000 |
| M | 0.8090 | 0.7053 | -7.1729 | -7.8544 |

**12.** Verre de lunettes selon l'une quelconque des revendications 8 à 11,
**caractérisé en ce que** la coordonnée x du centre de la trajectoire (demi-somme des coordonnées x minimale et maximale) est inférieure à la valeur xz selon les tableaux suivants :

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -11.3070 | -7.5948 | 7.6229 | 11.3708 |
| y = -10mm | | | | |
| x [mm] | -30.0000 | -20.0000 | 20.0000 | 30.0000 |
| xs [mm] | -11.2191 | -7.5330 | 7.5648 | 11.2896 |

| Sph = -4.0 dpt, Add = 2.0 dpt | | | | |
|---|---|---|---|---|
| y = 5mm | | | | |
| x [mm] | -30.0000 | -20.0000 | 20.0000 | 30.0000 |
| xz [mm] | -11.3556 | -7.6222 | 7.6442 | 11.4147 |
| y = -10mm | | | | |
| x[mm] | -30.0000 | -20.0000 | 20.0000 | 30.0000 |
| xz [mm] | -11.3064 | -7.5867 | 7.6028 | 11.3640 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -11.3994 | -7.6451 | 7.6506 | 11.4351 |
| y = -10mm | | | | |
| x [mm] | -30.0000 | -20.0000 | 20.0000 | 30.0000 |
| xz [mm] | -11.3968 | -7.6411 | 7.6255 | 11.4162 |

| Sph = 0.5 dpt, Add = 1.0 dpt | | | | |
|---|---|---|---|---|
| y = -5mm | | | | |
| x [mm] | -30.0000 | -20.0000 | 20.0000 | 30.0000 |
| xz [mm] | -13.7030 | -9.1089 | 9.0633 | 13.6540 |
| y = -10mm | | | | |
| x [mm] | -30.0000 | -20.0000 | 20.0000 | 30.0000 |
| xz [mm] | -13.7736 | -9.1541 | 9.1126 | 13.7117 |

| Sph = 0.5 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -13.7989 | -9.1581 | 9.1193 | 13.7287 |
| y = -10mm | | | | |
| x [mm] | -30.0000 | -20.0000 | 20.0000 | 30.0000 |
| xz [mm] | -13.9392 | -9.2439 | 9.1778 | 13.8389 |

| Sph = 0.5 dpt, Add =3,0 dpt | | | | |
|---|---|---|---|---|
| y= -5mm | | | | |
| x [mm] | -30.0000 | -20.0000 | 20.0000 | 30.0000 |
| xz [mm] | -14.0239 | -9.2904 | 9.2212 | 13.9123 |
| y= -10mm | | | | |
| x [mm] | -30.0000 | -20.0000 | 20.0000 | 30.0000 |
| xz [mm] | -14.2516 | -9.9367 | 9.3185 | 14.0854 |

| Sph = +5.0 dpt, Add = 1.0 dpt | | | | |
|---|---|---|---|---|
| y = -5mm | | | | |
| x [mm] | -30.0000 | -20.0000 | 20.0000 | 30.0000 |
| xx [mm] | -17.3295 | -11.3902 | 11.2874 | 17.1168 |
| y = -10mm | | | | |
| x [mm] | -30.0000 | -20.0000 | 20.0000 | 30.0000 |
| xz [mm] | -12.9054 | -11.5804 | 11.4231 | 17.3537 |

| Sph = +5.0 dpt, Add = 2.0 dpt | | | | |
|---|---|---|---|---|
| y = -5mm | | | | |
| x [mm] | -30.0000 | -20.0000 | 20.0000 | 30.0000 |
| xz [mm] | -17.7640 | -11.6405 | 11.5155 | 17.5159 |

(suite)

| y = -10mm | | | | |
|---|---|---|---|---|
| x [mm] | -30.0000 | -20.0000 | 20.0000 | 30.0000 |
| xz [mm] | -12,8237 | -11.8832 | 11.7004 | 17.8471 |

| Sph = +5.0 dpt, Add = 3.0 dpt | | | | |
|---|---|---|---|---|
| y = -5mm | | | | |
| x [mm] | -30.0000 | -20.0000 | 20.0000 | 30.0000 |
| xz [mm] | -18.2779 | -11.9499 | 11.7629 | 17.9519 |
| y = -10mm | | | | |
| x [mm] | -30.0000 | -20.0000 | 20.0000 | 30.0000 |
| xz [mm] | -12.7057 | -12.2769 | 12.0264 | 18.3631 |

**13.** Verre de lunettes selon l'une quelconque des revendications 8 à 12,
**caractérisé en ce que** la coordonnée yx du centre de la trajectoire (demi-somme des coordonnées y minimale et maximale) est inférieure à la valeur yz selon les tableaux suivants :

| Sph = -4.0 dpt, Add = 1.0 dpt | | | | |
|---|---|---|---|---|
| y = -5mm | | | | |
| x [mm] | -30.0000 | -20.0000 | 20.0000 | 30.0000 |
| yz [mm] | -3.9197 | -3.9560 | -3.9576 | -3.9235 |
| y = -10mm | | | | |
| x [mm] | -30.0000 | -20.0000 | 20.0000 | 30.0000 |
| yz [mm] | -9.7598 | -9.8352 | -9.8493 | -9.7834 |

| Sph = -4.0 dpt, Add =2.0 dpt | | | | |
|---|---|---|---|---|
| y= -5mm | | | | |
| x [mm] | -30.0000 | -20.0000 | 20.0000 | 30.0000 |
| yz [mm] | -3.9663 | -3.9993 | -3.9887 | -3.9561 |
| y = -10mm | | | | |
| x [mm] | -30.0000 | -20.0000 | 20.0000 | 30.0000 |
| yz [mm] | -9.9049 | -9.9681 | -9.9741 | -9.9176 |

| Sph = -4.0 dpt, Add = 3.0 dpt | | | | |
|---|---|---|---|---|
| y = -5mm | | | | |
| x [mm] | -30.0000 | -20.0000 | 20.0000 | 30.0000 |
| y= [mm] | -4.0196 | -4.0496 | -4.0167 | -3.9821 |

(suite)

| y = | | | | -10mm |
|---|---|---|---|---|
| **x [mm]** | -30.0000 | -20.0000 | 20.0000 | 30.0000 |
| **yz [mm]** | -10.0654 | -10.1113 | -10.0993 | -10.0540 |

| Sph = 0.5 dpt, Add = 1.0 dpt | | | | |
|---|---|---|---|---|
| y = -5mm | | | | |
| **x [mm]** | -30.0000 | -20.0000 | 20.0000 | 30.0000 |
| **yz [mm]** | -4.5384 | -4.5218 | -4.5064 | -4.5176 |
| y = -10mm | | | | |
| **x [mm]** | -30.0000 | -20.0000 | 20.0000 | 30.0000 |
| **yz [mm]** | -11.3786 | -11.3388 | -11.3147 | -11.3468 |

| Sph = 0.5 dpt, Add = 2.0 dpt | | | | |
|---|---|---|---|---|
| y = -5mm | | | | |
| **x [mm]** | -30.0000 | -20.0000 | 20.0000 | 30.0000 |
| **yz [mm]** | -4.6100 | -4.5783 | -4.5450 | -4.5643 |
| y = -10mm | | | | |
| **x [mm]** | -30.0000 | -20.0000 | 20.0000 | 30.0000 |
| **y = [mm]** | -11.5798 | -11.5070 | -11.4737 | -11.5325 |

| Sph = 0.5 dpt, Add = 3.0 dpt | | | | |
|---|---|---|---|---|
| y = -5mm | | | | |
| **x [mm]** | -30.0000 | -20.0000 | 20.0000 | 30.0000 |
| **y= [mm]** | -4.7552 | -4.7015 | -4.6287 | -4.6610 |
| y = -10mm | | | | |
| **x [mm]** | -30.0000 | -20.0000 | 20.0000 | 30.0000 |
| **yz [mm]** | -11.9218 | -11.8067 | -11.7550 | -11.8468 |

| Sph = +5.0 dpt, add = 1.0 dpt | | | | |
|---|---|---|---|---|
| y = -5mm | | | | |
| x [mm] | -30.0000 | -20.0000 | 20.0000 | 30.0000 |
| yz [mm] | -5.5028 | -5.4121 | -5.3601 | -5.4312 |
| y = -10mm | | | | |
| x [mm] | -30.0000 | -20.0000 | 20.0000 | 30.0000 |
| yz [mm] | -18.8206 | -13.7124 | -13.6144 | -13.7883 |

| Sph = +5.0 dpt, Add = 2.0 dpt | | | | |
|---|---|---|---|---|
| y=-5 mm | -30.0000 | -20.0000 | 20.0000 | 30.0000 |
| x [mm] | -30.0000 | -20.0000 | 20.0000 | 30.0000 |
| yz (mm) | -5.7060 | -5.5526 | -5.5047 | -5.6056 |
| y=-10mm | | | | |
| x [mm] | -30.0000 | -20.0000 | 20.0000 | 30.0000 |
| yz [mm] | -18.9496 | -14.1505 | -14.0444 | -14.2803 |

| Sph = + 5.0 dpt, Add = 3.0 dpt | | | | |
|---|---|---|---|---|
| Y = -5mm | | | | |
| X [mm] | -30.0000 | -20.0000 | 20.0000 | 30.0000 |
| Yz [mm] | -5.9781 | -5.8024 | -5.6754 | -5.8106 |
| Y = -10mm | | | | |
| X [mm] | -30.0000 | -20.0000 | 20.0000 | 30.0000 |
| Yz = [mm] | -19.0922 | -14.6873 | -14.5602 | -14.8518 |

**14.** Verre de lunettes selon l'une quelconque des revendications 8 à 13,
**caractérisé en ce que** des valeurs interpolées et/ou extrapolées s'appliquent à des règlements non mentionnés.

Einstärkenglas: sph −2.5dpt    Einstärkenglas: sph +2.5 dpt

**Fig. 1**

**Fig. 2**          **Fig. 3**

**Fig. 4**

**Fig. 5**

**Fig. 6**

**Fig. 7**

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,88114 |
| 17,5 | 0 | 0 | 0 | 0 | 0 | 1,727544 | 1,572749 | 1,476457 | 1,43867 |
| 15 | 0 | 0 | 0 | 1,826893 | 1,556258 | 1,343761 | 1,189465 | 1,093506 | 1,055966 |
| 12,5 | 0 | 0 | 1,827844 | 1,500623 | 1,231244 | 1,019591 | 0,865786 | 0,770078 | 0,732707 |
| 10 | 0 | 0 | 1,558189 | 1,232921 | 0,965089 | 0,754524 | 0,601373 | 0,505935 | 0,468649 |
| 7,5 | 0 | 1,726383 | 1,345574 | 1,022576 | 0,756795 | 0,547868 | 0,39579 | 0,300844 | 0,263672 |
| 5 | 0 | 1,566588 | 1,188478 | 0,868198 | 0,605063 | 0,398525 | 0,248337 | 0,154463 | 0,117588 |
| 2,5 | 0 | 1,459495 | 1,084527 | 0,767617 | 0,508048 | 0,305076 | 0,15802 | 0,066273 | 0,030092 |
| 0 | 1,833183 | 1,402774 | 1,031483 | 0,718726 | 0,463772 | 0,26566 | 0,123183 | 0,035027 | 0,00048 |
| -2,5 | 0 | 1,394456 | 1,027487 | 0,719736 | 0,470458 | 0,278427 | 0,141793 | 0,058484 | 0,026833 |
| -5 | 0 | 1,432945 | 1,070942 | 0,768862 | 0,525984 | 0,340808 | 0,210844 | 0,133162 | 0,105213 |
| -7,5 | 0 | 1,51707 | 1,160674 | 0,864715 | 0,628528 | 0,450405 | 0,32724 | 0,255205 | 0,230946 |
| -10 | 0 | 0 | 1,296365 | 1,00678 | 0,777293 | 0,605921 | 0,488983 | 0,42183 | 0,400599 |
| -12,5 | 0 | 0 | 1,479087 | 1,195879 | 0,972726 | 0,807223 | 0,695213 | 0,631598 | 0,61234 |
| -15 | 0 | 0 | 0 | 1,43296 | 1,214957 | 1,053701 | 0,944992 | 0,883608 | 0,86536 |
| -17,5 | 0 | 0 | 0 | 0 | 0 | 1,344445 | 1,237531 | 1,177299 | 1,159499 |
| -20 | 0 | 0 | 0 | 0 | 0 | 0 | 0 | 0 | 1,494969 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,459338 | 1,538288 | 1,675159 | 0 | 0 | 0 | 0 | 0 |
| 15 | 1,076827 | 1,155872 | 1,292618 | 1,4865 | 1,737064 | 0 | 0 | 0 |
| 12,5 | 0,753727 | 0,832805 | 0,969293 | 1,162491 | 1,41186 | 1,717203 | 0 | 0 |
| 10 | 0,489795 | 0,568789 | 0,704732 | 0,896843 | 1,144544 | 1,447722 | 0 | 0 |
| 7,5 | 0,28482 | 0,36345 | 0,498312 | 0,688619 | 0,933952 | 1,234434 | 1,590531 | 0 |
| 5 | 0,138583 | 0,216248 | 0,349126 | 0,536561 | 0,778744 | 1,075794 | 1,428451 | 0 |
| 2,5 | 0,050725 | 0,126539 | 0,256119 | 0,439446 | 0,677017 | 0,969632 | 1,318088 | 0 |
| 0 | 0,020498 | 0,093392 | 0,218221 | 0,395724 | 0,62728 | 0,914254 | 1,257604 | 1,658066 |
| -2,5 | 0,046199 | 0,115457 | 0,23443 | 0,404667 | 0,628679 | 0,908687 | 1,245883 | 0 |
| -5 | 0,124484 | 0,169993 | 0,302891 | 0,46531 | 0,680802 | 0,952663 | 1,282563 | 0 |
| -7,5 | 0,250899 | 0,313413 | 0,420938 | 0,576172 | 0,783244 | 1,046462 | 1,368183 | 0 |
| -10 | 0,421421 | 0,482323 | 0,585923 | 0,735457 | 0,935213 | 1,190203 | 0 | 0 |
| -12,5 | 0,633866 | 0,694298 | 0,795689 | 0,941459 | 1,135746 | 1,383841 | 0 | 0 |
| -15 | 0,837307 | 0,947892 | 1,048564 | 1,192212 | 1,38304 | 0 | 0 | 0 |
| -17,5 | 1,181572 | 1,242623 | 1,343387 | 0 | 0 | 0 | 0 | 0 |
| -20 | 0 | 0 | 0 | 0 | 0 | 0 | 0 | 0 |

**Fig. 8 a**



Fig. 8 b

Fig. 8 c

Flaechenastigmatismus

**Fig. 8 d**

Mittl. Flaechenbrechwert

Fig. 8 e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2814936 C
- WO 9527229 A
- DE 4342234 C
- US 4606622 A
- DE 19612177